# EUROPEAN PATENT APPLICATION

(11) **EP 4 607 294 A1**
(43) Date of publication of application: **27.08.2025**
(21) Application number: 24210984.1
(22) Date of filing: 05.11.2024
(51) Int. Cl.: G05B 13/02, G05B 15/02

(54) **SYSTEMS AND METHODS FOR ENVIRONMENTAL CONTROL**

(30) Priority: 14.11.2023 US 202363598647 P
(71) Applicant: Dar Al-Handasah, 317 Manama (BH)
(72) Inventor: SHAIR, Faysal, Manama 317 (BH); EL FEGHALI, Dany, Manama 317 (BH); SAADEDDINE, Majdi, Manama 317 (BH)
(74) Representative: Boult Wade Tennant LLP

(57) **Abstract**

The system may utilize input data sensors to populate a digital twin of an environment. The system may predict, using machine learning models, a duration required to change an observed environmental condition to a target environmental condition using one or more environmental control devices and one or more occupancy intervals of one or more occupants of the environment. The system may calculate, using the digital twin, an estimated power consumption at the target environmental condition and optimization instructions for the environmental control devices. The system may additionally estimate, using a third machine learning model, an environment optimization parameter based on the one or more optimization instructions and the input data. The system may dynamically generate a graphical user interface comprising a graphical representation of the environment and the environment optimization parameter.

## Description

### CROSS-REFERENCE TO RELATED APPLICATIONS

The application claims priority, under 35 U.S.C. § 119(e), to U.S. Provisional Patent Application No. 63/598,647 entitled "Systems and Methods for Environmental Control," filed November 14, 2023, the entire contents of which are fully incorporated herein by reference.

### FIELD

The disclosed technology relates to systems and methods for environmental control. Specifically, this disclosed technology relates to optimizing energy consumption of a building using digital twin modeling and machine learning models to quantify actual and missed energy savings.

### BACKGROUND

Buildings, especially large multi-level office structures, consume a large amount of energy to maintain climate settings (e.g., temperature, humidity, brightness). Buildings may also have multiple zones where one zone needs to maintain a first environmental setting while another zone needs to maintain a second environmental setting.

Traditional systems and methods for environmental control typically have relied only on reactive technologies (e.g., thermostat) to control environmental conditions. Furthermore, traditional environmental control systems are unable to calculate and compensate for specific variations throughout a building, such as are created by a building's geometry, layout, or occupancy. These shortcomings can result in significantly higher energy usage, more wear on climate control components, and higher costs.

Accordingly, there is a need for improved systems and methods for environmental control. Embodiments of the present disclosure are directed to this and other considerations.

### SUMMARY

Disclosed embodiments may include a system for environmental control. The system may include one or more sensors, one or more controllers, one or more processors, and memory in communication with the one or more processors and storing instructions that, when executed by the one or more processors, are configured to cause the system to optimize environmental control. The system may receive input data from the one or more sensors. The system may also populate a digital twin of the environment based at least in part on the input data from the one or more sensors, the digital twin comprising one or more zones. The system may continuously output, to the one or more controllers, environmental control instructions, wherein the environmental control instructions control an operation of one or more environmental control devices. Furthermore, the system may predict, using a first machine learning model, a duration required to change an observed environmental condition to a target environmental condition of the one or more zones based on the input data using the one or more environmental control devices. Additionally, the system may predict, using a second machine learning model, one or more occupancy intervals of one or more occupants of the environment based on the input data. The system may calculate, using the digital twin, an estimated power consumption at the target environmental condition in the one or more zones based on the duration, the one or more occupancy intervals, and the input data. The system may also generate a comparison by comparing the estimated power consumption in the one or more zones to an actual power consumption observed in the one or more zones. Furthermore, the system may generate, using the digital twin, one or more optimization instructions for the one or more of the environmental control devices to optimize energy use based on the comparison and the input data. The system may automatically output the one or more optimization instructions to optimize energy use for the one or more zones to the one or more controllers. The system may additionally estimate, using a third machine learning model, an environment optimization parameter for the one or more zones based on the one or more optimization instructions and the input data. The system may dynamically generate a graphical user interface comprising a graphical representation of the environment and the environment optimization parameter for the one or more zones.

Disclosed embodiments may include a system for environmental control. The system may include one or more sensors, one or more controllers, one or more processors, and memory in communication with the one or more processors and storing instructions that, when executed by the one or more processors, are configured to cause the system to optimize environmental control. The system may receive input data from the one or more sensors. The system may also populate a digital twin of the environment based at least in part on the input data from the one or more sensors, the digital twin comprising one or more zones. The system may continuously output, to the one or more controllers, environmental control instructions, wherein the environmental control instructions control an operation of one or more environmental control devices, Furthermore, the system may predict, using a first machine learning model, a duration required to change an observed environmental condition to a target environmental condition of the one or more zones based on the input data using the one or more environmental control devices. The system may additionally predict, using a second machine learning model, one or more occupancy intervals of one or more occupants of the environment based on the input data. The system may calculate, using the digital twin, an estimated power consumption at the target environmental condition in the one or more zones based on the duration, the one or more occupancy intervals, and the input data. The system may also generate a comparison by comparing the estimated power consumption in the one or more zones to an actual power consumption observed in the one or more zones. Furthermore, the system may generate, using the digital twin, one or more optimization instructions for one or more of the environmental control devices to optimize energy use based on the comparison and the input data. Additionally, the system may generate a first graphical user interface displaying the one or more optimization instructions. The system may also transmit the first graphical user interface to a user device. The system may additionally receive, from the user device, a selection of the one or more optimization instructions. Furthermore, the system may output the selected optimization instructions to optimize energy use to the one or more controllers. The system may estimate, using a third machine learning model, a first environment optimization parameter based on the selected optimization instructions and the input data. The system may also generate a second graphical user interface displaying the first environment optimization parameter. Finally, the system may transmit the second graphical user interface to the user device.

Disclosed embodiments may include a system for environmental control. The system may include one or more sensors, one or more controllers, one or more processors, and memory in communication with the one or more processors and storing instructions that, when executed by the one or more processors, are configured to cause the system to optimize environmental control. The system may receive input data from the one or more sensors. The system may also populate a digital twin of the environment based at least in part on the input data from the one or more sensors, the digital twin comprising one or more zones. Furthermore, the system may predict, using a first machine learning model, a duration required to change an observed environmental condition to a target environmental condition of the one or more zones based on the input data using one or more environmental control devices. The system may also predict, using a second machine learning model, one or more occupancy intervals of one or more occupants of the environment based on the input data. The system may calculate, using the digital twin, an estimated power consumption at the target environmental condition in the one or more zones based on the duration, the one or more occupancy intervals, and the input data. Additionally, the system may generate a comparison by comparing the estimated power consumption in the one or more zones to an actual power consumption observed in the one or more zones. The system may also generate, using the digital twin, one or more optimization instructions for the one or more environmental control devices to optimize energy use based on the comparison and the input data; automatically output the one or more optimization instructions to optimize energy use for the one or more zones. The system may estimate, using a third machine learning model, an environment optimization parameter for the one or more zones based on the one or more optimization instructions and the input data. Furthermore, the system may generate a graphical user interface displaying a graphical representation of the environment and the environment optimization parameter for the one or more zones.

Further implementations, features, and aspects of the disclosed technology, and the advantages offered thereby, are described in greater detail hereinafter, and can be understood with reference to the following detailed description, accompanying drawings, and claims.

### BRIEF DESCRIPTION OF THE DRAWINGS

Reference will now be made to the accompanying drawings, which are not necessarily drawn to scale, and which illustrate various implementations, aspects, and principles of the disclosed technology. In the drawings:
FIG. 1 is a flow diagram illustrating an exemplary method for environmental control in accordance with certain embodiments of the disclosed technology.
FIG. 2 is a flow diagram illustrating an exemplary method for environmental control in accordance with certain embodiments of the disclosed technology.
FIG. 3 is block diagram of an example optimization system used to provide environmental control, according to an example implementation of the disclosed technology.
FIG. 4 is block diagram of an example system that may be used to provide environmental control, according to an example implementation of the disclosed technology.
FIGS. 5A-5J are example graphical user interfaces used to control an example optimization system to provide environmental control, according an example implementation of the disclosed technology.

### DETAILED DESCRIPTION

The present disclosure may include environmental control systems and methods for a variety of different buildings. The system may ingest a large variety of input data, which may then be used to digitally generate a digital twin model of the building. Further data input may be used to model airflow through and climate control information throughout the building. Using one or more machine learning models, the system may predict the impact of numerous factors on the climate control of certain zones of the building. This may allow the system to calculate the estimated power consumption at a target environmental condition in a certain area and provide recommendations to optimize power consumption. Using machine learning, and the digital twin model, the system may then be able to calculate, at a granular level, the energy savings and cost benefit of each recommendation.

Accordingly, this may allow the system to provide the following benefits: (1) The system may simulate the optimal energy consumption of the climate control system and make actual performance closer to optimal performance. (2) The system may be capable of calculating the actual energy consumed by each zone in a building. (3) The system may be capable of calculating a target energy consumption based on occupancy data of a building and other changing variables such as temperature and airflow. (4) The system may be capable of quantifying the impact of controlling individual pieces of climate control equipment (e.g., HVAC units, dampers, resetting temperature setpoints). (5) The system may be capable of calculating the missed power savings if no action was taken, or actual power savings if an action was taken. (6) The system may be capable of quantifying the future financial impact of specific interventions. (7) The system may provide insight to a user on ways to increase efficiency through an interactive graphical user interface and allow the user to change the settings of climate control equipment or may automatically increase efficiency by controlling the settings of climate control equipment.

The systems and methods described herein utilize, in some instances, machine learning models, which are necessarily rooted in computers and technology. Machine learning models are a unique computer technology that involves training models to complete tasks and make decisions. The present disclosure details an environmental control system. This, in some examples, may involve using input data from one or more sensors and one or more machine learning models. For example, the system may use a first machine learning model to determine an output an amount of time required to change a first environmental condition to a second environmental condition after receiving inputs data from one or more sensors. In another example, the system may additionally use a second machine learning model to forecast the arrival time of one or more occupants of an area using the inputs from the one or more sensors. In a third example, the system may additionally use a temporal convolutional neural network to predict optimized airflow using sensor data. Using machine learning models in this way may allow the system to calculate the energy needed to change the environment in a structure, which can be used to more accurately determine optimization strategies for saving energy in a particular structure. This also allows the system to predict the energy impact of granular decisions proactively and with a greater level or accuracy than done previously. Because the present disclosure generates machine learning based predictions in real time of how the system would have performed had optimization actions not occurred, this approach offers a clear advantage and improvement over prior technologies that used savings estimations based on a rough comparison of before and after baselines. Overall, the systems and methods disclosed have significant practical applications in the environmental control field because of the noteworthy improvements mentioned above, which are important to solving present problems with this technology.

Additionally, the systems and methods described herein utilize, in some instances, graphical user interfaces, which are necessarily rooted in computers and technology. Graphical user interfaces are a computer technology that allows for user interaction with computers through touch, pointing devices, or other means. The present disclosure details an environmental control system. This, in some examples, may involve receiving data from a user device to dynamically change the graphical user interface. The graphical user interface may reflect a graphical representation of a digital twin model of a building. The user input may alter the digital representation or the digital twin model. The user input may be used to alter the output to one or more environmental control devices. Using a graphical user interface in this way may allow the system to allow a user to interface with an environmental management system at a significantly more granular level than previously contemplated. The graphical user interface may allow the user to see the impact of environmental control changes or decisions in real-time, or in advance. This may allow the user to make better-informed decisions about environmental controls.

Some implementations of the disclosed technology will be described more fully with reference to the accompanying drawings. This disclosed technology may, however, be embodied in many different forms and should not be construed as limited to the implementations set forth herein. The components described hereinafter as making up various elements of the disclosed technology are intended to be illustrative and not restrictive. Many suitable components that would perform the same or similar functions as components described herein are intended to be embraced within the scope of the disclosed electronic devices and methods.

Reference will now be made in detail to example embodiments of the disclosed technology that are illustrated in the accompanying drawings and disclosed herein. Wherever convenient, the same reference numbers will be used throughout the drawings to refer to the same or like parts.

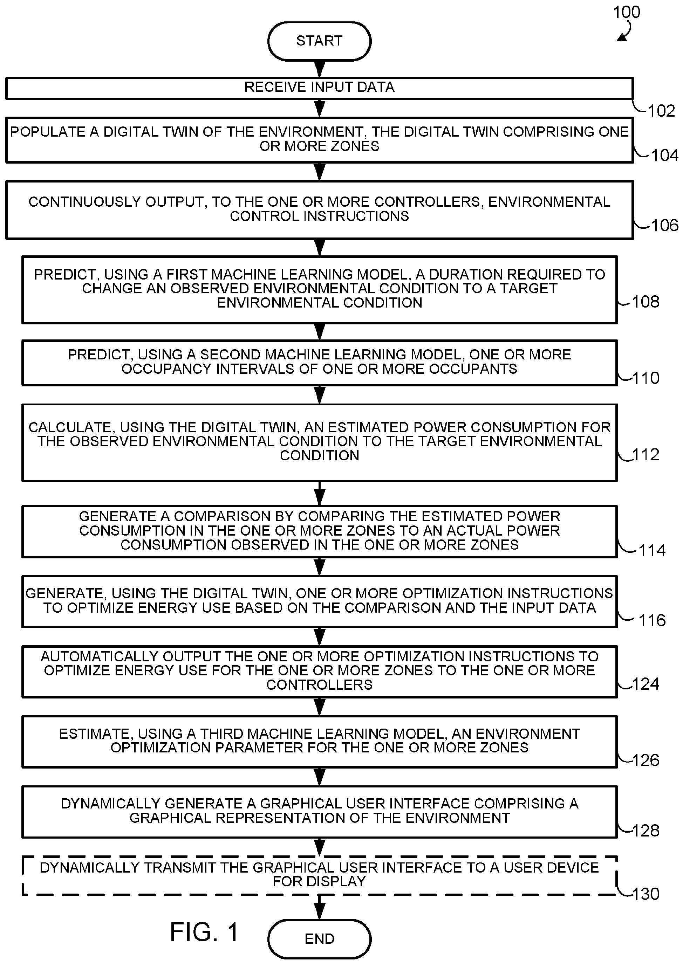

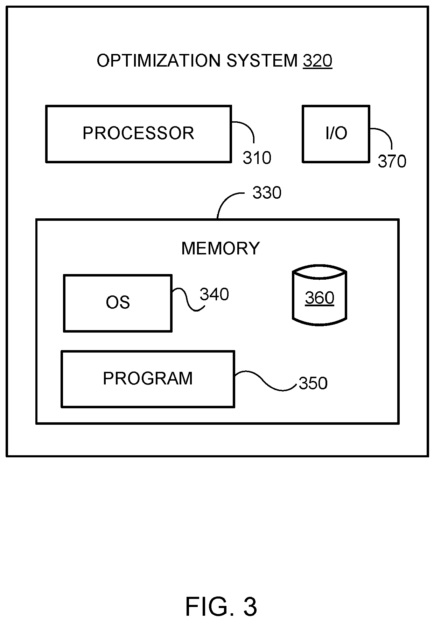

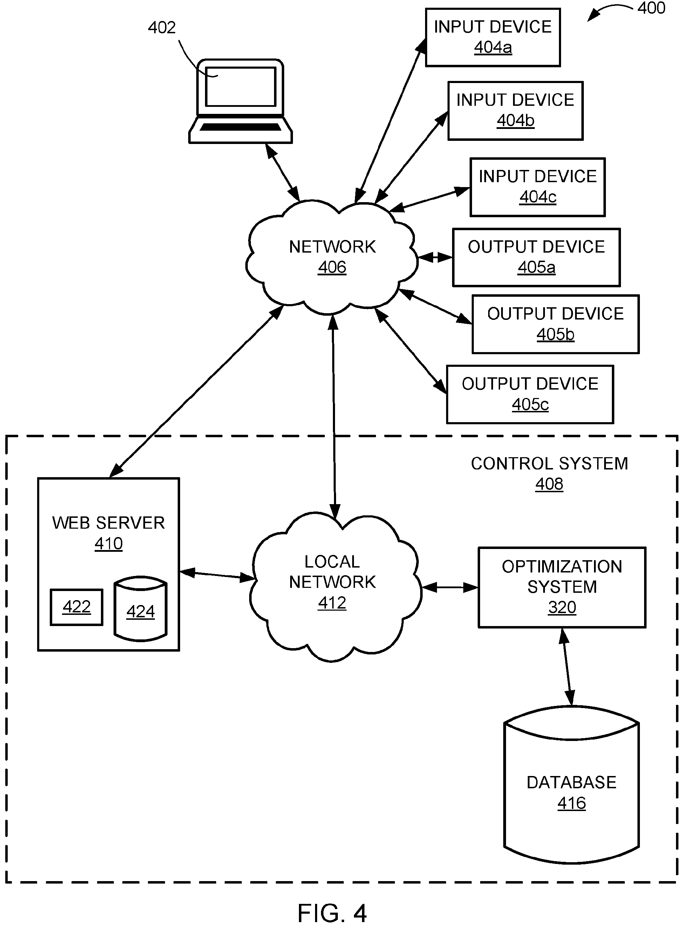

FIG. 1 is a flow diagram illustrating an exemplary method 100 for environmental control, in accordance with certain embodiments of the disclosed technology. The steps of method 100 may be performed by one or more components of the system 400 (e.g., optimization system 320 or web server 410 of control system 408 or user device 402), as described in more detail with respect to FIGS. 3 and 4.

In block 102, the optimization system 320 may receive or retrieve input data from one or more sensors. The input data may come from a variety of different sensors within an environment. The environment may be a building. The input data may be received from a variety of different building operations. For example, the system may receive data from a building access control system, a lighting control system, sensors or internet-of-things (IOT) sensors, a closed circuit television (CCTV) system (e.g., used to provide occupancy data), a personnel attendance system, a people counter system, a building management system, a computerized maintenance management system (CMMS) (e.g., used to indicate maintenance record data or faults occurring in system), an information technology (IT) system (e.g., used to indicate computer, workstation, machine, or server utilization), and physical meters for electricity, water, natural gas, and other utilities. The optimization system 320 may receive data from one or more environmental control devices. The environmental control devices may include heating, ventilation, and air conditioning systems (HVAC) and their constituent parts, for example: air handling units, pressure independence module (or damper), variable air volume dampers, variable refrigerant system units, and chilled water units. The environmental control devices may comprise individual sensors from the HVAC system providing data to optimization system 320 or the environmental control devices may have controllers providing data to the optimization system 320. The environmental control devices may also provide information to a building management system, which then may provide the information to the optimization system 320. The optimization system 320 may be capable of receiving data from third-party sources over the internet for providing weather information (e.g., current temperature, humidity, forecasts). Sensors or IOT sensors may be capable of capturing climate conditions in different areas of the building and transmitting the data to optimization system 320.

Optimization system 320 may receive input data in a variety of different formats. Each type of input data or input data from each different source may use a different communication protocol. Each control system may use its own communication protocol. Therefore, optimization system 320 may translate the assorted different communication protocols into a common, universal format (e.g., standardize the data). The optimization system 320 may use a gateway layer to receive or retrieve the input data. The gateway layer may involve using an application programming interface (API) to acquire data from the assorted sources. The gateway layer may utilize rest APIs to interact with each data source.

Once the input data is received or retrieved, the optimization system 320 may store the input data in one or more databases. The optimization system 320 may store the raw data in the assorted formats associated with each source or may store the data in a universal, centralized format (e.g., the system may store timeseries data, real-time data, or static data). The centralized data format may vary based on different embodiments. In some embodiments, the optimization system 320 may store data based on dates and times (e.g., timeseries data may include schema key value pair stored in a POSTGRESQL database with TimescaleDB). The optimization system 320 may use engines to optimize data retention and storage.

In some embodiments, communication loss with data sources may be frequent. This may result in incomplete data, discontinuous data, or disagreeing data. Accordingly, optimization system 320 may utilize data preprocessing strategies. Preprocessing strategies may include data cleaning, outlier recording, and other data quality verifications (e.g., detecting and handling or rectifying missing values, data anomalies, and outliers). The optimization system 320 may use training data to aid in preprocessing.

In block 104, the optimization system 320 may populate a digital twin of the environment. The digital twin may be a digital or virtual representation of the environment, such as the building that optimization system 320 is being used with. The digital twin may comprise computed-aided design (CAD) models or building information models (BIM) (e.g., a three-dimensional BIM) of the building, including building layouts (such as walls, doors, HVAC unit positions, ductwork layouts, and vent positions) and other information relevant for monitoring data throughout the environment. The digital twin may comprise static data and live data regarding the environment. For example, the digital twin may comprise other features of the environment, such as lighting fixtures, fans, desks, and computer workstations. The input data received in block 102 may be used to further aid in creating, generating, populating, or modifying the digital twin. Furthermore, the input data may be used to populate further information within the digital twin model, which may be used for calculation or use in later blocks. In some embodiments, the optimization system 320 may generate a digital twin model of the environment. In some embodiments, the optimization system 320 may utilize or populate a pre-generated digital twin model of the environment with the input data.

The digital twin may also comprise one or more zones. Zones may be related to features of the building, such as by floor or by area. Zones may also be preexisting features of buildings. Zones may be lighting zones, HVAC zones (e.g., the area served by one terminal unit of an HVAC system), an electrical circuit (e.g., a circuit controlling multiple lights or workstations), a open office space (e.g., open area office space), a meeting room, or a closed office space (e.g., office space with closable doors). For example, in a warehouse building, the office area may be a first zone with first temperature and humidity setpoints, and the floorspace (e.g., where items are stored) may be a second zone with second temperature and humidity setpoints different from the first temperature and humidity setpoints. A digital representation of the digital twin may be visible to the user via a graphical user interface.

In some embodiments, the optimization system 320 may utilize a digital twin model or a portion of a digital twin model (such as a BIM) received as input data from a data source. Further input data may be used by optimization system 320 to continuously populate and optimize the received digital twin model. In some embodiments, the digital twin may be generated at a first time from input data, and then subsequently the input data may be used within the previously generated digital twin model. The digital twin may or may not be generated repeatedly by optimization system 320.

In block 106, the optimization system 320 may output environmental control instructions. The environmental control instructions may be output to the one or more environmental control devices or one or more controllers controlling the environmental control devices. Alternatively, the optimization system 320 may output environmental control instructions to a building management system, where the building management directs the environmental control instructions to individual environmental control devices. In some embodiments, the optimization system 320 may output the environmental control instructions regularly or continuously. In some embodiments, the optimization system 320 may output the environmental control instructions at set intervals (e.g., every 5 minutes, every 15 minutes, every 30 minutes, every hour). In some embodiments, the optimization system 320 may iteratively receive the input data and iteratively assess the input data, iteratively change the environmental control instructions, and iteratively output the environmental control instructions to the environmental control devices on a continuous basis. For example, the optimization system 320 may receive first input data from the one or more sensors at 10:04AM, the optimization system 320 outputs first environmental control instructions at 10:14AM based on the digital twin model and the 10:04AM input data. At 10:15AM, the optimization system 320 may receive second input data from the one or more sensors, analyze the difference between the first input data and the second input data and output a second environmental control instructions different from the first environmental control instructions at 10:18AM.

In some embodiments, the optimization system 320 may output the environmental control instructions based on a basic or general environmental control strategy (e.g., a temperature, humidity, carbon dioxide, or duct static pressure setpoint). This may be provided to the optimization system 320 via the graphical user interface or via the building management system.

In block 108, the optimization system 320 may predict a duration required to change an observed environmental condition to a target environmental condition. This may be completed in response to a request to change the environmental condition, either manually or automatically (e.g., lowering the temperature setpoint). The duration may be predicted for one or more zones or an entire structure. The optimization system 320 may receive input data regarding an observed environmental condition. The observed environmental condition may be a current environmental condition in a certain area (e.g., one or more zones) at the present time. The observed environmental condition may be determined using the input data from one or more sensors located within the appropriate zone. For example, a temperature sensor may be used to identify that a particular room within a building is 24 degrees Celsius. The target environmental condition may be a desired environmental condition in a certain area (e.g., the one or more zones) at a certain time. The target environmental condition may be determined using the input data from a user device regarding a setpoint (e.g., the setpoint for the specific zone is 22 degrees Celsius). Alternatively, the target environmental condition may be determined by rule-based algorithms or programmed schedules (e.g., the optimization system 320 may determine that the setpoint at a certain time of day is a certain temperature and humidity).

The optimization system 320 may utilize the input data and the digital twin model when predicting or calculating the duration of time needed to change the observed environmental condition to the target environmental condition. The optimization system 320 may utilize one or more first machine learning models to predict or calculate the duration of time needed to change the observed environmental condition to the target environmental condition. The first machine learning model may be trained using past data, validated, and then deployed. The optimization system 320 may utilize the first machine model to determine a duration of time to reach the target (or desired environmental condition) using the information supplied from the populated digital twin model. The output may be a time in a number of seconds, minutes, hours, or another indication of time. For example, if a target environmental condition of the environment is 22 degrees Celsius at 7:00 AM, the first machine learning model may be used to predict how much time before 7:00 AM, given other input data (e.g., from the sensors, from preset configuration values) the system will be required to start to reach 22 degrees Celsius by 7:00 AM. In some embodiments, the optimization system 320 may comprise a safety value to add to the duration.

In some embodiments, the optimization system 320 may collect and utilize training data. The training data may be specific to the digital twin model of the specific building or may be specific to a particular zone. In other embodiments, the data may be general and based on many digital twin models with many different zones. The training data may be used to train the first machine learning model. Training data may include temperature difference (e.g., average zone temperature less the zone occupied setpoint), outdoor temperature, or outside air enthalpy (e.g., utilizing outdoor relative humidity). The first machine learning model may be trained iteratively using the output generated. The first machine learning model may be constantly retrained using the output data. The training data may be used to aid the first machine learning model in predicting the duration to reach the desired environmental condition. The training data may contain details of similar buildings or similar zones in similar environments (e.g., comprising similar weather patterns at similar times of year). In some embodiments, the first machine learning model may be a support vector machine algorithm. In some embodiments, the first machine learning model may use continuous learning, such as periodic retraining or reinforcement learning.

In block 110, the optimization system 320 may predict or calculate one or more occupancy intervals. The occupancy intervals may be times or groups of times where people are expected to enter the building or zone. For example, a first occupancy interval may be from 7:00AM to 7:29AM and a second occupancy interval may be from 7:30AM to 7:59AM. Within the occupancy intervals, optimization system 320 may predict how many occupants may be arriving in a particular zone using the input data. In the example above, the optimization system 320 may determine using the input data that four people will arrive in zone one in the first occupancy interval and seven people will enter zone one in the second occupancy interval. In some embodiments, the optimization system 320 may output a flag to indicate that a certain zone is occupied (e.g., a 1 indicating the zone is occupied or a 0 to indicate the zone is unoccupied).

Optimization system 320 may utilize specific input data to determine the occupancy intervals. For example, the optimization system 320 may use access control system data, personnel attendance system data, or a people counter system. In some embodiments, the optimization system 320 may be able to determine from the input data where the occupant is likely to be within a larger building or complex. For example, if an individual scans their badge at an access control system to obtain access to a main entry door on the ground floor at 8:34AM and the individual's office is on the third floor in zone 4, then the optimization system 320 may increase the occupancy interval covering 8:34AM of zone 4 to compensate for the individual, even though the individual has not directly arrived to zone 4. Accordingly, the optimization system 320 may utilize data from the access control system to determine or estimate an individual user's estimated whereabouts within a zone or building by identifying the individual. In some embodiments, such as where optimization system 320 may utilize data from a people counter system (e.g., a system that just counts the number of people in the building or area and cannot identify an individual), optimization system 320 may not be able to determine a known location of an individual, but may use the known presence of an additional individual as part of calculations for the occupancy interval (e.g., adding an additional person to the calculation for the occupancy interval).

In some embodiments, occupancy intervals may represent a duration that individuals are expected to stay within a zone or a building. In other embodiments, occupancy intervals may represent an arrival time or group of arrival times for a certain zone or building. The occupancy intervals may consider the time the individuals enter or exit the building. In some embodiments, the occupancy interval may be a flag indicating that a particular zone or area is occupied.

In some embodiments, optimization system 320 may utilize one or more second machine learning models to predict the one or more occupancy intervals. The second machine learning model may be a forecasting machine learning model. The one or more second machine learning models may receive input data and using the input data predict the occupancy intervals for one or more occupants of the environment. This may be completed for the environment generally or on a zone-by-zone basis. Similarly, the second machine learning model may predict the occupancy intervals of single users or individuals over time or groups of individuals over time. The optimization system 320 may use the second machine learning model to predict employee arrival times on a daily basis. Accordingly, the second machine learning model may be trained at several different levels, including, for example: an organizational training level (e.g., including data regarding when employees in different roles, departments, and/or zones are expected to arrive) and individual training level (e.g., including historical data regarding when employees actually arrive over time). The second machine learning model may be periodically retrained (e.g., at periodic intervals, such as every two weeks, every month, every two months). The second machine learning model may be retrained when change occurs (e.g., an organizational change, such as new work hours are enforced) or when otherwise required (e.g., as requested by a user through the graphical user interface).

In block 112, the optimization system 320 may calculate an estimated power consumption at the target environmental condition. This may be calculated for one or more zones or the entire structure using input data and the digital twin model. This may also be calculated using the duration predicted in block 108 and the occupancy intervals predicted in block 110. The optimization system 320 may calculate the estimated power consumption by first calculating a targeted airflow calculation. The targeted airflow calculation may be calculated by calculating the optimized airflow for a particular air handling unit (e.g., based on digital twin model within a particular zone). For air handling units used to cool multiple zones, the targeted airflow calculation may be proportioned for each zone using the digital twin model. The optimization system 320 may utilize the input from blocks 108 and 110 to increase the accuracy of calculations (e.g., the optimization system 320 may account if the zone is occupied). The optimization system 320 may use the target airflow calculation to determine an estimated power consumption of a particular zone for a particular time, range of times, or activity (e.g., the power consumption to lower temperature from 24 degrees Celsius to 22 degrees Celsius).

In some embodiments, the outputs from blocks 108 or 110 may be unavailable (for example, if the building does not have the hardware to support measuring the occupants of a zone). In this case, block 112 and subsequent blocks may be completed with all available data resources. In some embodiments, the estimated power consumption may represent an ideal power consumption figure.

In block 114, the optimization system 320 may generate a comparison by comparing the estimated power consumption to an observed power consumption. This may occur for an entire structure or for one or more zones. In some embodiments, this may be completed on a more granular level within a zone, such as by individual device. The comparison may be a value or a series of values regarding the estimated power consumption and/or the observed power consumption. Over time, the optimization system 320 may receive input data which indicates power consumption for individual zones (e.g., for specific times or over a period of time). In some embodiments, this may entail virtual metering, where the power of a single air handling unit may be allocated to multiple zones. Once the observed power consumption has been determined, the optimization system 320 may subtract the observed power consumption from the estimated power consumption to generate a comparison value. If the comparison value is greater than zero, the optimization system 320 may determine that efficiency improvements are possible for the calculated zone. If the comparison value is zero, the optimization system 320 may determine that efficiency improvements are not possible for the calculated zone. In some embodiments, the optimization system may only proceed to block 116 (to generate optimization instructions) if the comparison value is greater than zero.

In block 116, the optimization system 320 may generate one or more optimization instructions for one or more environmental control devices. The optimization instructions may be generated using the digital twin model. The one or more optimization instructions may be variations or changes to the environmental control instructions described with regard to block 106. The optimization instructions may be specific to optimize energy use for a particular zone of the one or more zones by changing an output to one or more devices. The optimization instructions may be based on the comparison generated in block 114 between the estimated power consumption and the actual power consumption. The optimization instructions may be further based on the input data received in block 102, the duration predicted in block 108, or the occupancy intervals predicted in block 110. In some embodiments, the optimization instructions may be zone-specific or device-specific recommendations on how to reduce power consumption and save energy. The optimization instructions may be specific (e.g., turn off overhead lamp X to save Y amount of energy).

In some embodiments, the optimization instructions may be influenced by a rule-based decisioning structure based on the input data, such as goals specified by building management system data. For example, the input data from the building management system may specify that the building should remain as energy efficient as possible, but should remain between temperatures of 22 to 24 degrees Celsius from when workers arrive to when workers leave on weekdays. In this example, the optimization system 320 may determine that most workers leave by 6:30 PM on weekdays, and therefore the air handling units may be shutoff and the temperature may be allowed to rise at night until the next weekday morning at 6:30AM, when the air handling units need to be turned back on to begin to cool the building back to the specified 24 to 26 degrees Celsius. In another example, the input data may indicate that a particular employee is working from home during a workday and that the office lamp and/or other office equipment may be turned off. In some embodiments, the optimization instructions could relate to a goal, such as a fixed dollar savings amount or percentage (e.g., $30 less than last month or 10% yearly reduction in energy cost). Optimization instructions (recommendations) may be constantly generated and revised.

In some embodiments, the optimization instructions may be optimized using a machine learning model. For example, optimization instructions comprising setpoints may be reset based on forecasted occupancy patterns to optimize energy consumption.

In block 124, the optimization system 320 may automatically output the one or more optimization instructions. The optimization instructions may be output to optimize the energy for one or more zones or an entire building. In some embodiments, the optimization system 320 may output the optimization instructions separate from or in addition to the environmental control instructions. In some embodiments, the optimization system 320 may change the environmental control instructions to reflect the optimizations of the optimization instructions. The optimization instructions may be output to the same controllers as the environmental control instructions or different controllers. As described with respect to block 106, the controllers may control different aspects of the building including air conditioning, ventilation, or lighting.

As a result of the optimization instructions generated in block 116 and the output of the optimization instructions in block 118, the associated systems in the building may begin to affect the changes suggested by optimization system 320 to reduce energy consumption. Accordingly, the system may measure (and continuously measure the power consumption of the building and individual zones) to determine an actual power consumption.

In block 126, the optimization system 320 may estimate an environment optimization parameter. The optimization system 320 may determine what the energy consumption would have been had the changes suggested by optimization system 320 not been completed. For example, for optimization instructions recommending the shutdown of an air handling unit, and if the air handling unit is shutdown, the input data for measuring the power consumption if the air handling unit had not been shut down does not exist. Therefore, optimization system 320 may model, using the digital twin, what the airflow would have been throughout the zone using known input parameters. Optimization system 320 may include one or more third machine learning models. The one or more third machine learning models may be a temporal convolution network. The third machine learning model may be used to predict simulated non-optimized airflow within the digital twin model. The simulated airflow generated by the optimization system 320 may be used to determine a simulated power consumption for the one or more zones or the entire building. The simulated power consumption may be compared to an actual power consumption (the actual power consumption having been measured as a result of the changes affected by optimization instructions). The actual power consumption may be subtracted from the simulated power consumption to determine the environment optimization parameter. The environment optimization parameter may be quantified as unit of energy or a unit of currency (e.g., where the unit of energy is multiplied by a known electricity rate of a utility).

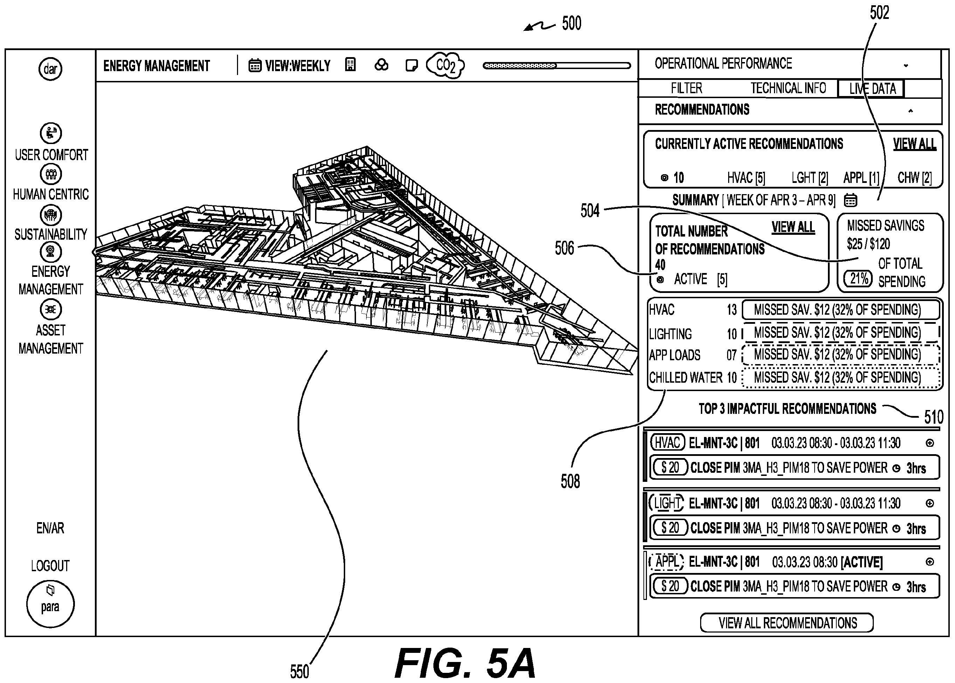

In block 128, the optimization system 320 may dynamically generate a graphical user interface. The graphical user interface may comprise a graphical representation of the digital twin. The graphical user interface may also allow the user to interact with, view, select, and change settings regarding optimization system 320. The graphical user interface may display a variety of input data, the predicted duration, the predicted occupancy intervals, the estimated power consumption, the observed power consumption, one or more optimization instructions showing potential savings, and environmental optimization parameters (e.g., actual savings). In some embodiments, the user may be able to select individual optimization instructions to allow or decline. The graphical user interface may dynamically change as a result of user input or in real-time as a result of changes to the environment. In some embodiments, the graphical user interface may be accessed directly from optimization system 320. In other embodiments, the graphical user interface may be transmitted and accessed from a user device. More details with regard to the graphical user interface are described with reference to FIGS. 5A-5J.

In optional block 130, the optimization system 320 may dynamically transmit the graphical user interface to a user device for display. The graphical user interface may allow the user to interact with the user device (such as a laptop computer or smartphone) to change the graphical user interface in real time. The graphical user interface may receive inputs from the user (via the user device). The inputs may be transmitted back to optimization system 320. The optimization system 320 may use the inputs to change the graphical user interface and then retransmit an updated graphical user interface to the user device in real time. The setting changes may include display changes, such as changing the graphical representation of the digital twin to zoom in on (or magnify) a particular zone or area, selecting a certain device (such as an air handling unit) to display additional information, or viewing graphs regarding energy consumption over time. The user may be able to request to view the optimization instructions grouped by system or chronology.

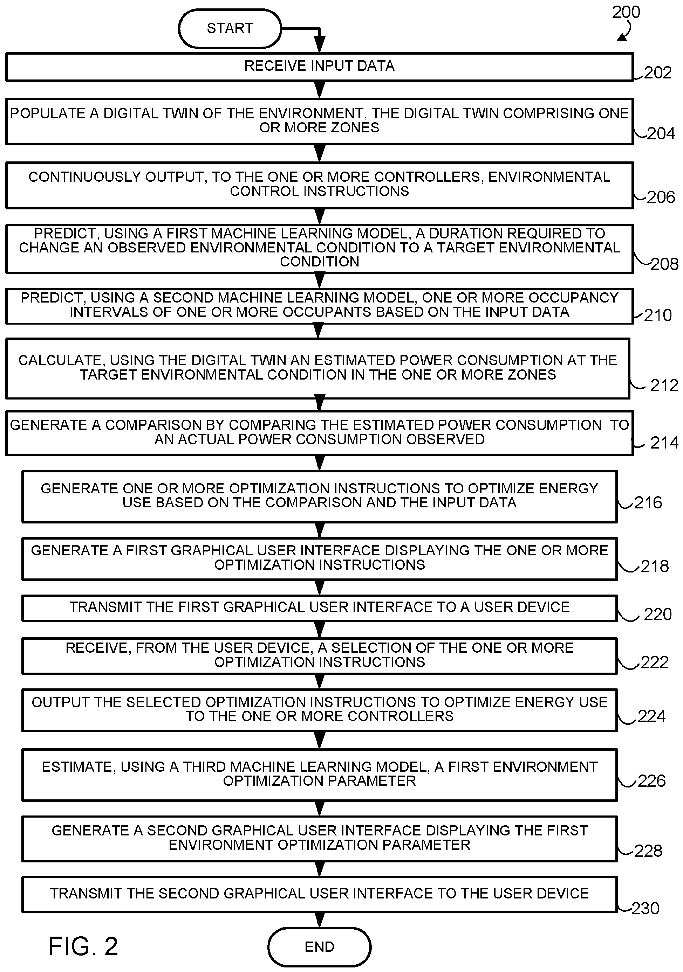

Method 100 may be repeated iteratively and may not be required to be performed in a specific order. The optimization system 320 may constantly receive data, determine new optimization instructions from the power consumption, output the new optimization instructions, and present the changing conditions on the graphical user interface. Furthermore, the user may be able to change or select the optimization instructions used, as described more specifically with reference to FIG. 2.

FIG. 2 is a flow diagram illustrating an exemplary method 200 for environmental control, in accordance with certain embodiments of the disclosed technology. The steps of method 200 may be performed by one or more components of the system 400 (e.g., optimization system 320 or web server 410 of control system 408 or user device 402), as described in more detail with respect to FIGS. 3 and 4.

Method 200 of FIG. 2 is similar to method 100 of FIG. 1. The descriptions of blocks 202, 204, 206, 208, 210, 212, 214, 216, 226, 228, and 230 in method 200 are similar to the respective descriptions of blocks 102, 104, 106, 108, 110, 112, 114, 116, 126, 128, and 130 of method 100 and are not repeated herein for brevity. Block 224 is different from block 124 and is described below. Additional blocks 218, 220, and 222 are described below. The primary difference between method 200 and method 100 is that in method 100, the optimization system 320 may automatically determine the optimization instructions and output the optimization instructions for use. In method 200, the optimization system 320 may determine the optimization instructions and may generate and transmit a graphical user interface to a user device. The user device may then receive a selection of optimization instructions selected by the user via the graphical user interface on the user device. The selected optimization instructions may then be used in subsequent blocks.

In block 218, the optimization system 320 may generate a first graphical user interface displaying the one or more optimization instructions previously generated in block 216. The optimization instructions may be time-specific, zone-specific, or device-specific. The optimization instructions may be presented in list form or the optimization instructions may be positioned on a graphical representation of the digital twin model. The generated first graphical user interface may incorporate features from the graphical user interface described in block 128 which are not repeated herein for brevity.

In block 220, the optimization system 320 may transmit the first graphical user interface to a user device. The first graphical user interface may allow the user to submit selections of the one or more optimization instructions via the user device. This may be using a variety of means for selections, such as check boxes, pop-up dialog boxes, selection boxes, among others.

In block 222, the optimization system 320 may receive a selection of the one or more optimization instructions from the user device. The selections may indicate the optimization instructions that the user would like the optimization system 320 to implement. The selection of the one or more optimization instructions may be a subset of the total optimization instructions presented to the user at a given time. This may allow the user to select certain optimization instructions that they want the system to proceed with, while avoiding others. For example, the optimization system 320 may suggest two optimization instructions: (1) shutdown air handling unit 5 since the zones 40-45 are currently unoccupied; and (2) shutdown all lights in zones 40-45 since they are currently unoccupied. The user may choose to shutdown the lights to save energy but may want to keep air handling unit 5 running to maintain the temperature in zone 5. The optimization instructions may be improved over time by analyzing optimization instructions that a user has selected versus the optimization instructions the user has failed to act upon or declined.

In block 224, the optimization system 320 may output the selected optimization instructions to optimize energy use to the one or more controllers. Besides outputting the selected optimization instructions to the controllers (rather than all optimization instructions), this block may be otherwise similar to block 124 and similar features may not be repeated herein for brevity. Accordingly, the effect of selected optimization instructions may be measured subsequently by the optimization system 320 using a first environmental optimization parameter in block 226.

For optimization instructions generated by optimization system 320 in block 216, but not selected by the user via the user device in block 222, the optimization system may calculate or estimate a second environment optimization parameter. The second environment optimization parameter may be based on the input data and the digital twin model. The second environment optimization parameter may be a missed savings estimate (e.g., the amount of savings that could have been if the action was taken). The optimization system 320 may measure the actual power consumed (from received input data) in a building or a zone and compare that to the estimated power consumption calculated in block 212. The second environment optimization parameter may be determined by subtracting the actual power consumption from the estimated power consumption. The second environment optimization parameter may be a missed savings amount. The second environment optimization parameter may be quantified as unit of energy or a unit of currency (e.g., where the unit of energy is multiplied by a known electricity rate of a utility). The second environment optimization parameter may be presented as part of the graphical user interface dynamically generated and presented to the user. Historical missed savings data may be used by the system to predict the future energy impact of similar devices in similar scenarios and may also be used as training data for the third machine learning model.

FIG. 3 is a block diagram of an example optimization system 320 used for environmental control according to an example implementation of the disclosed technology. According to some embodiments, the user device 402 and web server 410, as depicted in FIG. 4 and described below, may have a similar structure and components that are similar to those described with respect to optimization system 320 shown in FIG. 3. As shown, the optimization system 320 may include a processor 310, an input/output (I/O) device 370, a memory 330 containing an operating system (OS) 340 and a program 350. In certain example implementations, the optimization system 320 may be a single server or may be configured as a distributed computer system including multiple servers or computers that interoperate to perform one or more of the processes and functionalities associated with the disclosed embodiments. In some embodiments optimization system 320 may be one or more servers from a serverless or scaling server system. In some embodiments, the optimization system 320 may further include a peripheral interface, a transceiver, a mobile network interface in communication with the processor 310, a bus configured to facilitate communication between the various components of the optimization system 320, and a power source configured to power one or more components of the optimization system 320.

A peripheral interface, for example, may include the hardware, firmware and/or software that enable(s) communication with various peripheral devices, such as media drives (e.g., magnetic disk, solid state, or optical disk drives), other processing devices, or any other input source used in connection with the disclosed technology. In some embodiments, a peripheral interface may include a serial port, a parallel port, a general-purpose input and output (GPIO) port, a game port, a universal serial bus (USB), a micro-USB port, a high-definition multimedia interface (HDMI) port, a video port, an audio port, a Bluetooth^{™} port, a near-field communication (NFC) port, another like communication interface, or any combination thereof.

In some embodiments, a transceiver may be configured to communicate with compatible devices and ID tags when they are within a predetermined range. A transceiver may be compatible with one or more of: radio-frequency identification (RFID), near-field communication (NFC), Bluetooth^{™}, low-energy Bluetooth^{™} (BLE), WiFi^{™}, ZigBee^{™}, ambient backscatter communications (ABC) protocols or similar technologies.

A mobile network interface may provide access to a cellular network, the Internet, or another wide-area or local area network. In some embodiments, a mobile network interface may include hardware, firmware, and/or software that allow(s) the processor(s) 310 to communicate with other devices via wired or wireless networks, whether local or wide area, private or public, as known in the art. A power source may be configured to provide an appropriate alternating current (AC) or direct current (DC) to power components.

The processor 310 may include one or more of a microprocessor, microcontroller, digital signal processor, co-processor or the like or combinations thereof capable of executing stored instructions and operating upon stored data. The memory 330 may include, in some implementations, one or more suitable types of memory (e.g. such as volatile or non-volatile memory, random access memory (RAM), read only memory (ROM), programmable read-only memory (PROM), erasable programmable read-only memory (EPROM), electrically erasable programmable read-only memory (EEPROM), magnetic disks, optical disks, floppy disks, hard disks, removable cartridges, flash memory, a redundant array of independent disks (RAID), and the like), for storing files including an operating system, application programs (including, for example, a web browser application, a widget or gadget engine, and or other applications, as necessary), executable instructions and data. In one embodiment, the processing techniques described herein may be implemented as a combination of executable instructions and data stored within the memory 330.

The processor 310 may be one or more known processing devices, such as, but not limited to, a microprocessor from the Core^{™} family manufactured by Intel^{™}, the Ryzen^{™} family manufactured by AMD^{™}, or a system-on-chip processor using an ARM^{™} or other similar architecture. The processor 310 may constitute a single core or multiple core processor that executes parallel processes simultaneously, a central processing unit (CPU), an accelerated processing unit (APU), a graphics processing unit (GPU), a microcontroller, a digital signal processor (DSP), a field-programmable gate array (FPGA), an application-specific integrated circuit (ASIC) or another type of processing component. For example, the processor 310 may be a single core processor that is configured with virtual processing technologies. In certain embodiments, the processor 310 may use logical processors to simultaneously execute and control multiple processes. The processor 310 may implement virtual machine (VM) technologies, or other similar known technologies to provide the ability to execute, control, run, manipulate, store, etc. multiple software processes, applications, programs, etc. One of ordinary skill in the art would understand that other types of processor arrangements could be implemented that provide for the capabilities disclosed herein.

In accordance with certain example implementations of the disclosed technology, the optimization system 320 may include one or more storage devices configured to store information used by the processor 310 (or other components) to perform certain functions related to the disclosed embodiments. In one example, the optimization system 320 may include the memory 330 that includes instructions to enable the processor 310 to execute one or more applications, such as server applications, network communication processes, and any other type of application or software known to be available on computer systems. Alternatively, the instructions, application programs, etc. may be stored in an external storage or available from a memory over a network. The one or more storage devices may be a volatile or non-volatile, magnetic, semiconductor, tape, optical, removable, non-removable, or other type of storage device or tangible computer-readable medium.

The optimization system 320 may include a memory 330 that includes instructions that, when executed by the processor 310, perform one or more processes consistent with the functionalities disclosed herein. Methods, systems, and articles of manufacture consistent with disclosed embodiments are not limited to separate programs or computers configured to perform dedicated tasks. For example, the optimization system 320 may include the memory 330 that may include one or more programs 350 to perform one or more functions of the disclosed embodiments. For example, in some embodiments, the optimization system 320 may additionally manage dialogue and/or other interactions with the customer via a program 350.

The processor 310 may execute one or more programs 350 located remotely from the optimization system 320. For example, the optimization system 320 may access one or more remote programs that, when executed, perform functions related to disclosed embodiments.

The memory 330 may include one or more memory devices that store data and instructions used to perform one or more features of the disclosed embodiments. The memory 330 may also include any combination of one or more databases controlled by memory controller devices (e.g., server(s), etc.) or software, such as document management systems, Microsoft^{™} SQL databases, SharePoint^{™} databases, Oracle^{™} databases, Sybase^{™} databases, or other relational or non-relational databases. The memory 330 may include software components that, when executed by the processor 310, perform one or more processes consistent with the disclosed embodiments. In some embodiments, the memory 330 may include a optimization system database 360 for storing related data to enable the optimization system 320 to perform one or more of the processes and functionalities associated with the disclosed embodiments.

The optimization system database 360 may include stored data relating to status data (e.g., average session duration data, location data, idle time between sessions, and/or average idle time between sessions) and historical status data. According to some embodiments, the functions provided by the optimization system database 360 may also be provided by a database that is external to the optimization system 320, such as the database 416 as shown in FIG. 4.

The optimization system 320 may also be communicatively connected to one or more memory devices (e.g., databases) locally or through a network. The remote memory devices may be configured to store information and may be accessed and/or managed by the optimization system 320. By way of example, the remote memory devices may be document management systems, Microsoft^{™} SQL database, SharePoint^{™} databases, Oracle^{™} databases, Sybase^{™} databases, or other relational or non-relational databases. Systems and methods consistent with disclosed embodiments, however, are not limited to separate databases or even to the use of a database.

The optimization system 320 may also include one or more I/O devices 370 that may comprise one or more interfaces for receiving signals or input from devices and providing signals or output to one or more devices that allow data to be received and/or transmitted by the optimization system 320. For example, the optimization system 320 may include interface components, which may provide interfaces to one or more input devices, such as one or more keyboards, mouse devices, touch screens, track pads, trackballs, scroll wheels, digital cameras, microphones, sensors, and the like, that enable the optimization system 320 to receive data from a user (such as, for example, via the user device 402).

In examples of the disclosed technology, the optimization system 320 may include any number of hardware and/or software applications that are executed to facilitate any of the operations. The one or more I/O interfaces may be utilized to receive or collect data and/or user instructions from a wide variety of input devices. Received data may be processed by one or more computer processors as desired in various implementations of the disclosed technology and/or stored in one or more memory devices.

The optimization system 320 may contain programs that train, implement, store, receive, retrieve, and/or transmit one or more machine learning models. Machine learning models may include a neural network model, a generative adversarial model (GAN), a recurrent neural network (RNN) model, a deep learning model (e.g., a long short-term memory (LSTM) model), a random forest model, a convolutional neural network (CNN) model, a support vector machine (SVM) model, logistic regression, XGBoost, and/or another machine learning model. Models may include an ensemble model (e.g., a model comprised of a plurality of models). In some embodiments, training of a model may terminate when a training criterion is satisfied. Training criterion may include a number of epochs, a training time, a performance metric (e.g., an estimate of accuracy in reproducing test data), or the like. The optimization system 320 may be configured to adjust model parameters during training. Model parameters may include weights, coefficients, offsets, or the like. Training may be supervised or unsupervised.

The optimization system 320 may be configured to train machine learning models by optimizing model parameters and/or hyperparameters (hyperparameter tuning) using an optimization technique, consistent with disclosed embodiments. Hyperparameters may include training hyperparameters, which may affect how training of the model occurs, or architectural hyperparameters, which may affect the structure of the model. An optimization technique may include a grid search, a random search, a gaussian process, a Bayesian process, a Covariance Matrix Adaptation Evolution Strategy (CMA-ES), a derivative-based search, a stochastic hill-climb, a neighborhood search, an adaptive random search, or the like. The optimization system 320 may be configured to optimize statistical models using known optimization techniques.

Furthermore, the optimization system 320 may include programs configured to retrieve, store, and/or analyze properties of data models and datasets. For example, optimization system 320 may include or be configured to implement one or more data-profiling models. A data-profiling model may include machine learning models and statistical models to determine the data schema and/or a statistical profile of a dataset (e.g., to profile a dataset), consistent with disclosed embodiments. A data-profiling model may include an RNN model, a CNN model, or other machine-learning model.

The optimization system 320 may include algorithms to determine a data type, key-value pairs, row-column data structure, statistical distributions of information such as keys or values, or other property of a data schema may be configured to return a statistical profile of a dataset (e.g., using a data-profiling model). The optimization system 320 may be configured to implement univariate and multivariate statistical methods. The optimization system 320 may include a regression model, a Bayesian model, a statistical model, a linear discriminant analysis model, or other classification model configured to determine one or more descriptive metrics of a dataset. For example, optimization system 320 may include algorithms to determine an average, a mean, a standard deviation, a quantile, a quartile, a probability distribution function, a range, a moment, a variance, a covariance, a covariance matrix, a dimension and/or dimensional relationship (e.g., as produced by dimensional analysis such as length, time, mass, etc.) or any other descriptive metric of a dataset.

The optimization system 320 may be configured to return a statistical profile of a dataset (e.g., using a data-profiling model or other model). A statistical profile may include a plurality of descriptive metrics. For example, the statistical profile may include an average, a mean, a standard deviation, a range, a moment, a variance, a covariance, a covariance matrix, a similarity metric, or any other statistical metric of the selected dataset. In some embodiments, optimization system 320 may be configured to generate a similarity metric representing a measure of similarity between data in a dataset. A similarity metric may be based on a correlation, covariance matrix, a variance, a frequency of overlapping values, or other measure of statistical similarity.

The optimization system 320 may be configured to generate a similarity metric based on data model output, including data model output representing a property of the data model. For example, optimization system 320 may be configured to generate a similarity metric based on activation function values, embedding layer structure and/or outputs, convolution results, entropy, loss functions, model training data, or other data model output). For example, a synthetic data model may produce first data model output based on a first dataset and a produce data model output based on a second dataset, and a similarity metric may be based on a measure of similarity between the first data model output and the second-data model output. In some embodiments, the similarity metric may be based on a correlation, a covariance, a mean, a regression result, or other similarity between a first data model output and a second data model output. Data model output may include any data model output as described herein or any other data model output (e.g., activation function values, entropy, loss functions, model training data, or other data model output). In some embodiments, the similarity metric may be based on data model output from a subset of model layers. For example, the similarity metric may be based on data model output from a model layer after model input layers or after model embedding layers. As another example, the similarity metric may be based on data model output from the last layer or layers of a model.

The optimization system 320 may be configured to classify a dataset. Classifying a dataset may include determining whether a dataset is related to another datasets. Classifying a dataset may include clustering datasets and generating information indicating whether a dataset belongs to a cluster of datasets. In some embodiments, classifying a dataset may include generating data describing the dataset (e.g., a dataset index), including metadata, an indicator of whether data element includes actual data and/or synthetic data, a data schema, a statistical profile, a relationship between the test dataset and one or more reference datasets (e.g., node and edge data), and/or other descriptive information. Edge data may be based on a similarity metric. Edge data may and indicate a similarity between datasets and/or a hierarchical relationship (e.g., a data lineage, a parent-child relationship). In some embodiments, classifying a dataset may include generating graphical data, such as anode diagram, a tree diagram, or a vector diagram of datasets. Classifying a dataset may include estimating a likelihood that a dataset relates to another dataset, the likelihood being based on the similarity metric.

The optimization system 320 may include one or more data classification models to classify datasets based on the data schema, statistical profile, and/or edges. A data classification model may include a convolutional neural network, a random forest model, a recurrent neural network model, a support vector machine model, or another machine learning model. A data classification model may be configured to classify data elements as actual data, synthetic data, related data, or any other data category. In some embodiments, optimization system 320 is configured to generate and/or train a classification model to classify a dataset, consistent with disclosed embodiments.

The optimization system 320 may also contain one or more prediction models. Prediction models may include statistical algorithms that are used to determine the probability of an outcome, given a set amount of input data. For example, prediction models may include regression models that estimate the relationships among input and output variables. Prediction models may also sort elements of a dataset using one or more classifiers to determine the probability of a specific outcome. Prediction models may be parametric, non-parametric, and/or semi-parametric models.

In some examples, prediction models may cluster points of data in functional groups such as "random forests." Random Forests may comprise combinations of decision tree predictors. (Decision trees may comprise a data structure mapping observations about something, in the "branch" of the tree, to conclusions about that thing's target value, in the "leaves" of the tree.) Each tree may depend on the values of a random vector sampled independently and with the same distribution for all trees in the forest. Prediction models may also include artificial neural networks. Artificial neural networks may model input/output relationships of variables and parameters by generating a number of interconnected nodes which contain an activation function. The activation function of a node may define a resulting output of that node given an argument or a set of arguments. Artificial neural networks may generate patterns to the network via an 'input layer', which communicates to one or more "hidden layers" where the system determines regressions via a weighted connections. Prediction models may additionally or alternatively include classification and regression trees, or other types of models known to those skilled in the art. To generate prediction models, the optimization system may analyze information applying machine-learning methods.

While the optimization system 320 has been described as one form for implementing the techniques described herein, other, functionally equivalent, techniques may be employed. For example, some or all of the functionality implemented via executable instructions may also be implemented using firmware and/or hardware devices such as application specific integrated circuits (ASICs), programmable logic arrays, state machines, etc. Furthermore, other implementations of the optimization system 320 may include a greater or lesser number of components than those illustrated.

FIG. 4 is a block diagram of an example system that may be used to view and interact with control system 408, according to an example implementation of the disclosed technology. The components and arrangements shown in FIG. 4 are not intended to limit the disclosed embodiments as the components used to implement the disclosed processes and features may vary. As shown, control system 408 may interact with a user device 402 via a network 406. In certain example implementations, the control system 408 may include a local network 412, a optimization system 320, a web server 410, and a database 416.

In some embodiments, a user may operate the user device 402. The user device 402 can include one or more of a mobile device, smart phone, general purpose computer, tablet computer, laptop computer, telephone, public switched telephone network (PSTN) landline, smart wearable device, voice command device, other mobile computing device, or any other device capable of communicating with the network 406 and ultimately communicating with one or more components of the control system 408. In some embodiments, the user device 402 may include or incorporate electronic communication devices for hearing or vision impaired users.

In some embodiments, the input devices 404a-c may provide data to the control system 408 via the network 406. The control system 408 may provide instructions to control output devices 405a-c via the network. In some embodiments, the input devices 404a-c and output devices 405a-c may have two-way communication with the control system 408 and optimization system 320. Optimization system 320 may be able to request and receive information from, and/or control input devices 404a-c and output devices 405a-c. Examples of input devices 404a-c may include thermometers, humidity sensors, and light sensors. Examples of output devices 405a-c may include air handling units.

Users may include individuals such as, for example, building administrators, subscribers, clients, prospective clients, operators, executives, facility managers, or customers of an entity associated with an organization, such as individuals who have obtained, will obtain, or may obtain a product, service, or consultation from an entity associated with the control system 408. According to some embodiments, the user device 402 may include an environmental sensor for obtaining audio or visual data, such as a microphone and/or digital camera, a geographic location sensor for determining the location of the device, an input/output device such as a transceiver for sending and receiving data, a display for displaying digital images, one or more processors, and a memory in communication with the one or more processors.

The optimization system 320 may include programs (scripts, functions, algorithms) to configure data for visualizations and provide visualizations of datasets and data models on the user device 402 via a graphical user interface. This may include programs to generate graphs and display graphs. The optimization system 320 may include programs to generate histograms, scatter plots, time series, or the like on the user device 402. The optimization system 320 may also be configured to display properties of data models and data model training results including, for example, architecture, loss functions, cross entropy, activation function values, embedding layer structure and/or outputs, convolution results, node outputs, or the like on the user device 402.

The network 406 may be of any suitable type, including individual connections via the internet such as cellular or WiFi networks. In some embodiments, the network 406 may connect terminals, services, and mobile devices using direct connections such as radio-frequency identification (RFID), near-field communication (NFC), Bluetooth^{™}, low-energy Bluetooth^{™} (BLE), WiFi^{™}, ZigBee^{™}, ambient backscatter communications (ABC) protocols, USB, WAN, or LAN. Because the information transmitted may be personal or confidential, security concerns may dictate one or more of these types of connections be encrypted or otherwise secured. In some embodiments, however, the information being transmitted may be less personal, and therefore the network connections may be selected for convenience over security.

The network 406 may include any type of computer networking arrangement used to exchange data. For example, the network 406 may be the Internet, a private data network, virtual private network (VPN) using a public network, and/or other suitable connection(s) that enable(s) components in the system 400 environment to send and receive information between the components of the system 400. The network 406 may also include a PSTN and/or a wireless network.

The control system 408 may be associated with and optionally controlled by one or more entities such as a business, corporation, individual, partnership, or any other entity that provides one or more of goods, services, and consultations to individuals such as customers. In some embodiments, the control system 408 may be controlled by a third party on behalf of another business, corporation, individual, partnership. The control system 408 may include one or more servers and computer systems for performing one or more functions associated with products and/or services that the organization provides.

Web server 410 may include a computer system configured to generate and provide one or more websites accessible to customers, as well as any other individuals involved in access system 408's normal operations. Web server 410 may include a computer system configured to receive communications from user device 402 via for example, a mobile application, a chat program, an instant messaging program, a voice-to-text program, an SMS message, email, or any other type or format of written or electronic communication. Web server 410 may have one or more processors 422 and one or more web server databases 424, which may be any suitable repository of website data. Information stored in web server 410 may be accessed (e.g., retrieved, updated, and added to) via local network 412 and/or network 406 by one or more devices or systems of system 400. In some embodiments, web server 410 may host websites or applications that may be accessed by the user device 402. For example, web server 410 may host a financial service provider website that a user device may access by providing an attempted login that are authenticated by the optimization system 320. According to some embodiments, web server 410 may include software tools, similar to those described with respect to user device 402 above, that may allow web server 410 to obtain network identification data from user device 402. The web server may also be hosted by an online provider of website hosting, networking, cloud, or backup services, such as Microsoft Azure^{™} or Amazon Web Services^{™}.

The local network 412 may include any type of computer networking arrangement used to exchange data in a localized area, such as WiFi, Bluetooth^{™}, Ethernet, and other suitable network connections that enable components of the control system 408 to interact with one another and to connect to the network 406 for interacting with components in the system 400 environment. In some embodiments, the local network 412 may include an interface for communicating with or linking to the network 406. In other embodiments, certain components of the control system 408 may communicate via the network 406, without a separate local network 406.

The control system 408 may be hosted in a cloud computing environment (not shown). The cloud computing environment may provide software, data access, data storage, and computation. Furthermore, the cloud computing environment may include resources such as applications (apps), VMs, virtualized storage (VS), or hypervisors (HYP). User device 402 may be able to access control system 408 using the cloud computing environment. User device 402 may be able to access control system 408 using specialized software. The cloud computing environment may eliminate the need to install specialized software on user device 402.

In accordance with certain example implementations of the disclosed technology, the control system 408 may include one or more computer systems configured to compile data from a plurality of sources the optimization system 320, web server 410, and/or the database 416. The optimization system 320 may correlate compiled data, analyze the compiled data, arrange the compiled data, generate derived data based on the compiled data, and store the compiled and derived data in a database such as the database 416. According to some embodiments, the database 416 may be a database associated with an organization and/or a related entity that stores a variety of information relating to customers, transactions, ATM, and business operations. The database 416 may also serve as a back-up storage device and may contain data and information that is also stored on, for example, database 360, as discussed with reference to FIG. 3.

Embodiments consistent with the present disclosure may include datasets. Datasets may comprise actual data reflecting real-world conditions, events, and/or measurements. However, in some embodiments, disclosed systems and methods may fully or partially involve synthetic data (e.g., anonymized actual data or fake data). Datasets may involve numeric data, text data, and/or image data. For example, datasets may include identification data, demographic data, public data, government data, environmental data, traffic data, network data, transcripts of video data, photo data, and/or other data. Datasets of the embodiments may be in a variety of data formats including, but not limited to, PARQUET, AVRO, SQLITE, POSTGRESQL, MYSQL, ORACLE, HADOOP, CSV, JSON, PDF, JPG, BMP, Timeseries, TimescaleDB, and/or other data formats.

Datasets of disclosed embodiments may have a respective data schema (e.g., structure), including a data type, key-value pair, label, metadata, field, relationship, view, index, package, procedure, function, trigger, sequence, synonym, link, directory, queue, or the like. Datasets of the embodiments may contain foreign keys, for example, data elements that appear in multiple datasets and may be used to cross-reference data and determine relationships between datasets. Foreign keys may be unique (e.g., a personal identifier) or shared (e.g., a postal code). Datasets of the embodiments may be "clustered," for example, a group of datasets may share common features, such as overlapping data, shared statistical properties, or the like. Clustered datasets may share hierarchical relationships (e.g., data lineage).

Although the preceding description describes various functions of a web server 410, a optimization system 320, and a database 416, in some embodiments, some or all of these functions may be carried out by a single computing device.

FIGS. 5A-5J show a graphical user interface for controlling and interacting with optimization system 320. The graphical user interface may be used to setup optimization system 320, and therefore, may be a source of input data. The user may be able to provide input data to the graphical user interface, such as setpoints, preferences, and company policies. The optimization system 320 may be able to learn from and adapt to setpoints, preferences, and other data provided by the user.

FIG. 5A presents graphical user interface 500. Graphical user interface may show a graphical representation 550, such as 3D CAD model of the digital twin of the building or the one or more zones. The graphical user interface may provide the user with an assortment of views, which may provide different information about the system or technical information. The graphical user interface may provide live data and currently active recommendations (optimization instructions), which may be split into different categories (e.g., HVAC, lighting, app loads, and chilled water). The graphical user interface may provide a summary 502 of a selectable period of time (e.g., a week) and a number of number of recommendations 506 including the active recommendations. The graphical user interface may also provide a missed savings 504, which may be a percentage of total spending. The total spending may be an aggregation of the energy consumption of individual zones over time. The graphical user interface may split out the number of recommendations into categories 508 and describe the spending on a more granular level. Furthermore, the graphical user interface 500 may describe the top three most impactful recommendations 510. These may be ordered by the recommendations that have the largest energy or financial impact (e.g., dollar amount with respect to time, savings over duration per unit of time). They may be specific to dates and times and may have specific durations.

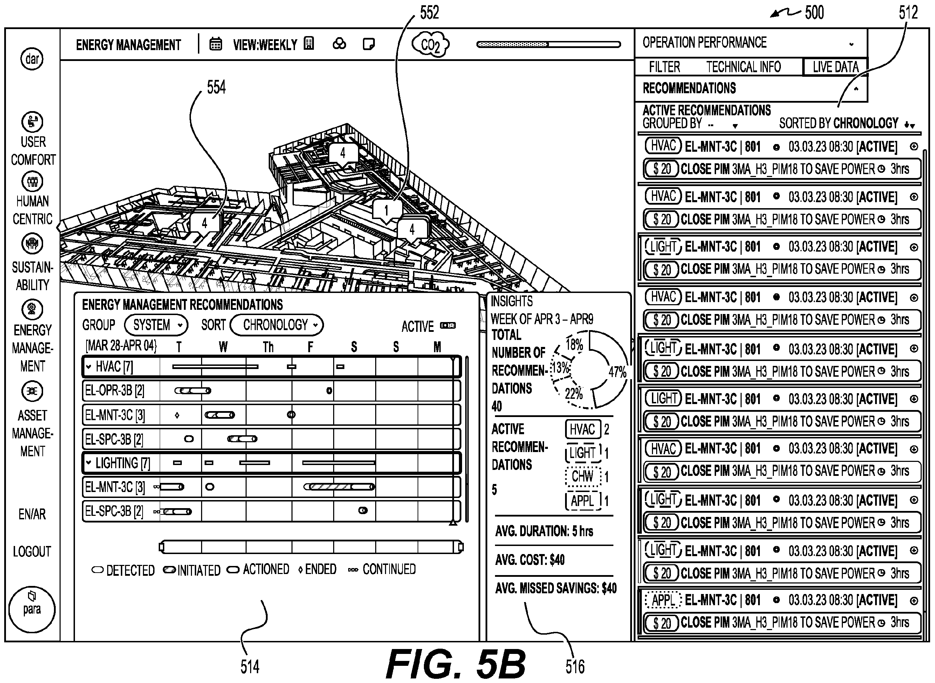

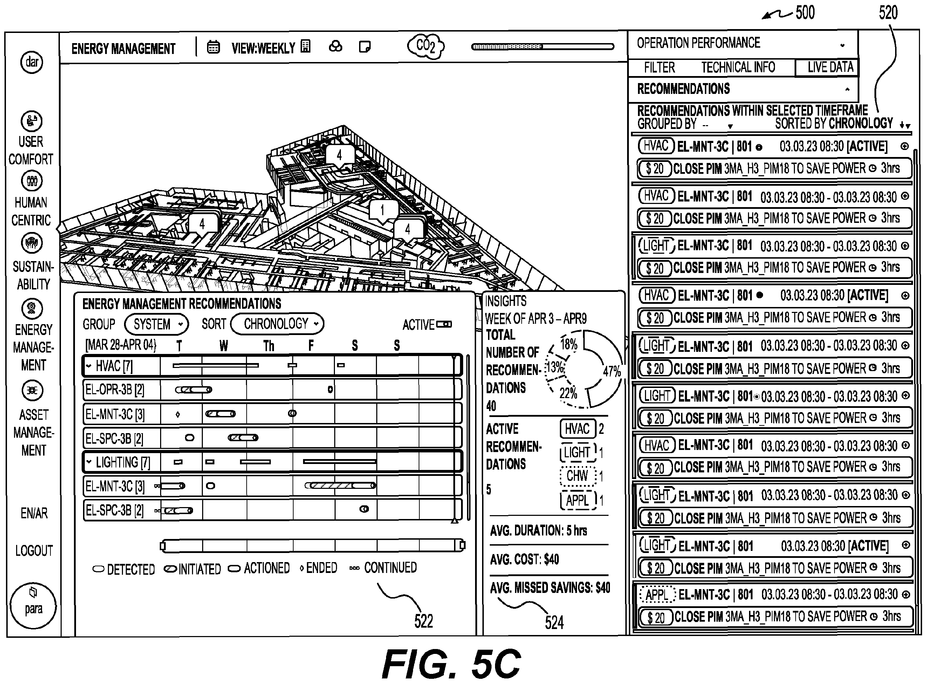

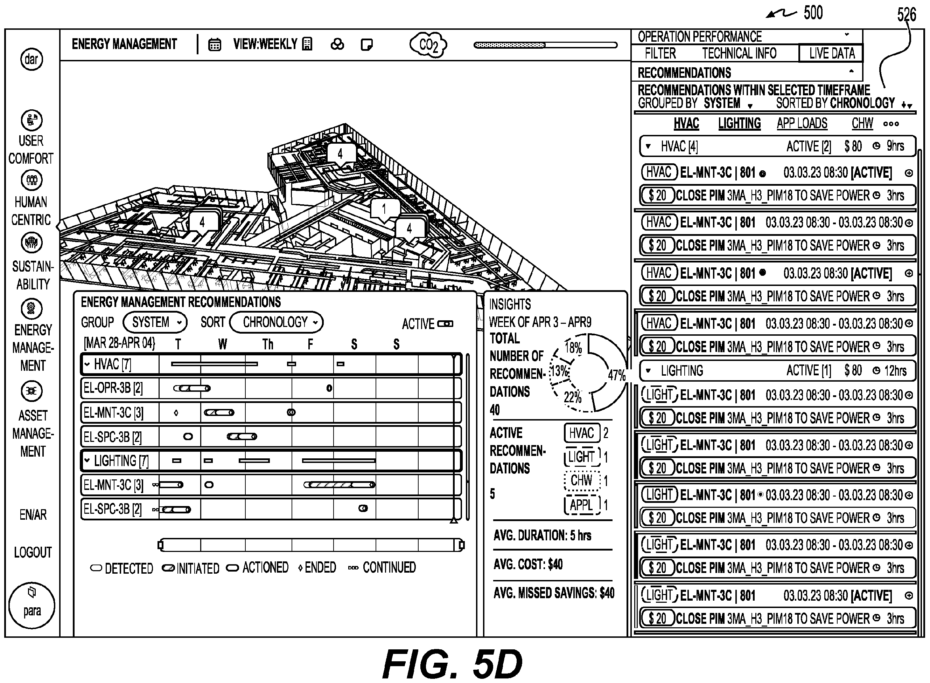

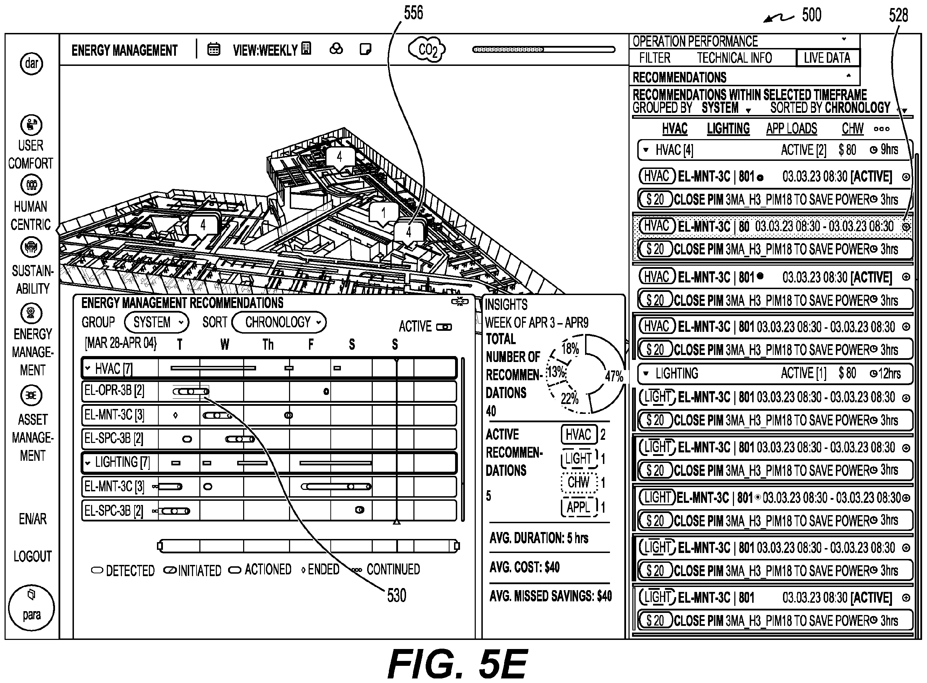

If the user selects view all active recommendations, the graphical user interface may change to FIG. 5B. FIG. 5B presents a different view of graphical user interface 500. The active recommendations 512 may be presented along the right side. The active recommendations may be grouped by system category (e.g., HVAC, lighting, app loads, and chilled water) or other category (e.g., functional area, missed savings, occurrence count, missed savings per hour, duration, tag name), and may be sorted by chronology (e.g., by date), priority, success rate, duration, tag name, or maximum savings. The active recommendations may also be presented in a weekly chart 514 with assorted different recommendations shown over time by when they were (1) detected, (2) initiated, (3) actioned, (4) ended, or (5) continued. The graphical user interface may also show an insights portion 516 showing the recommendations as grouped by system category. The insights portion 516 may also display the average duration of a recommendation, the average missed savings, and the average cost. Additionally, on the graphical representation, the recommendations may be shown in the location of the recommendation with an indicator 552. If multiple recommendations are within a close location on the graphical representation, then the stacked indicators 554 may be used. FIG. 5C shows the graphical user interface when sorted by chronology 520, which changes the weekly chart 522 and insights portion 524. FIG. 5D shows the graphical user interface 500 when grouped by system and sorted by chronology 526. The user may be able to select a different system to see a different grouping. Furthermore, if a recommendation is not currently active, the user may be able to select the recommendation in order to enable it or highlight it. FIG. 5E shows the graphical user interface 500 with a specific recommendation 528 highlighted. The graphical user interface also highlights the time the recommendation was active 530 on the weekly chart and the location 556 on the graphical representation.

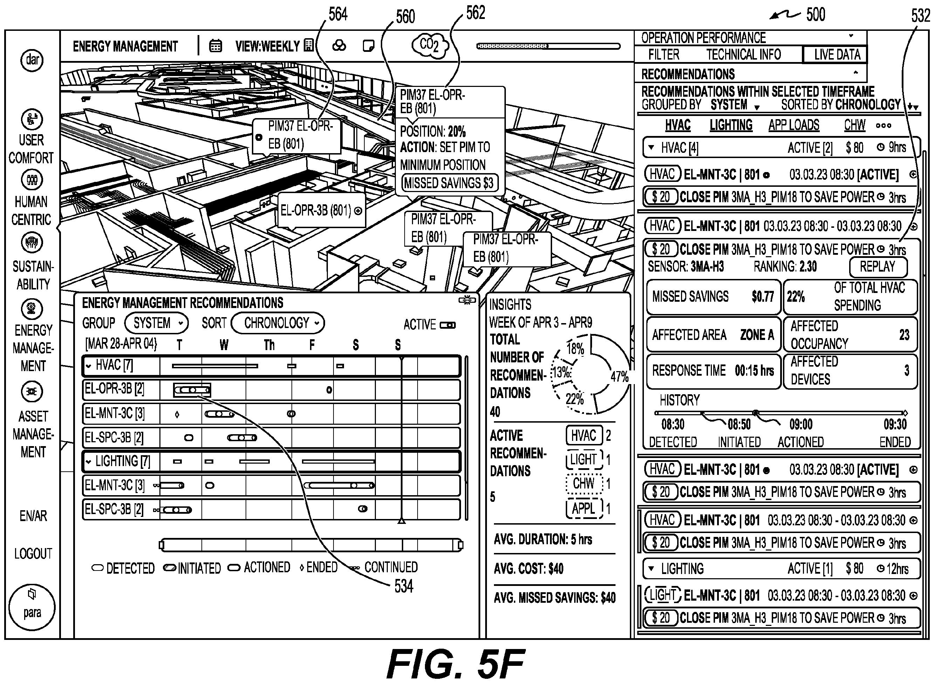

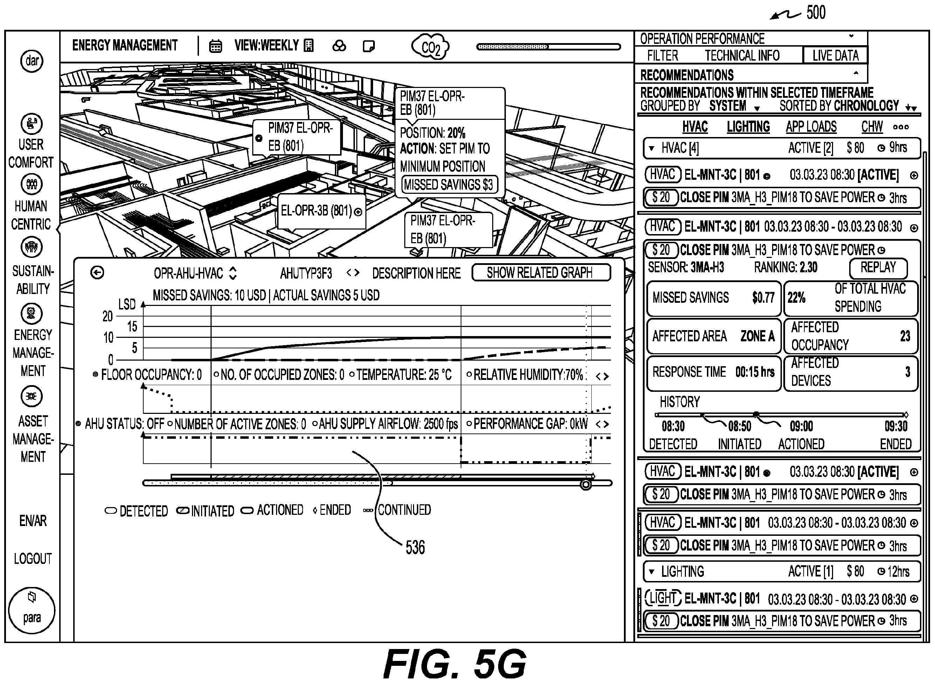

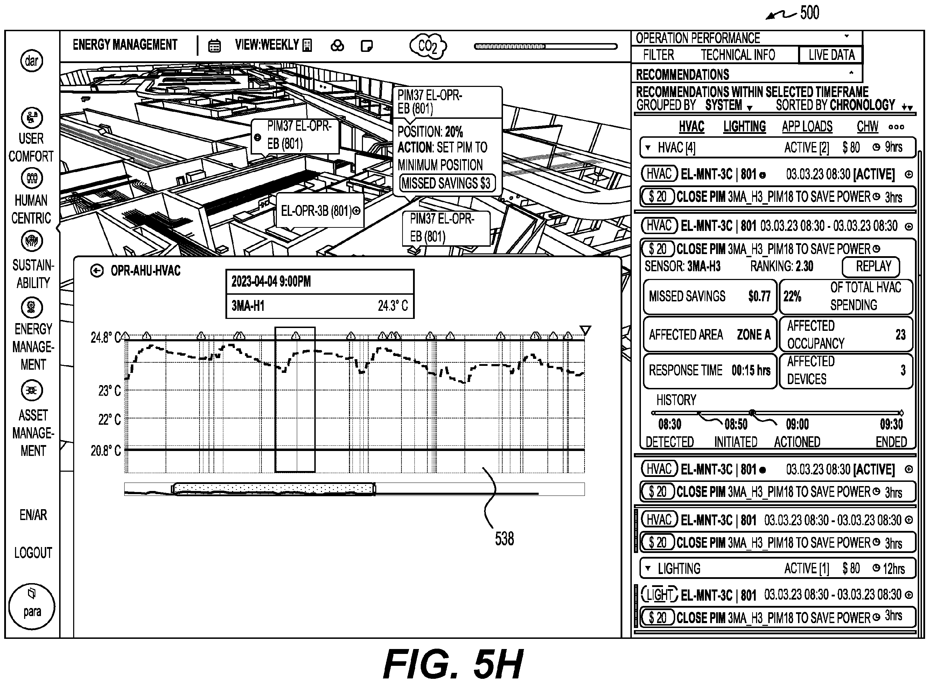

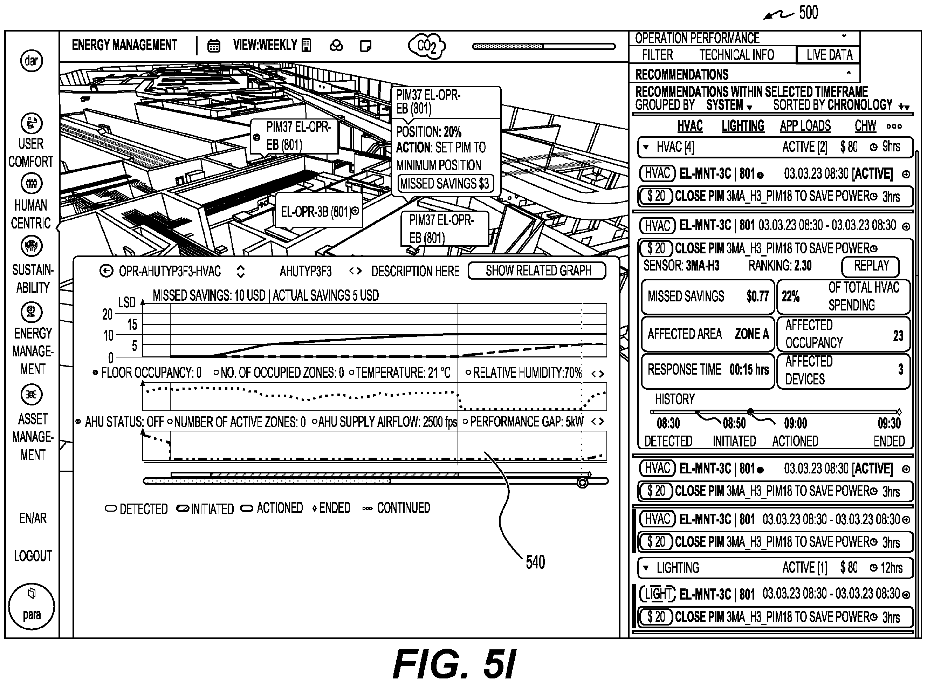

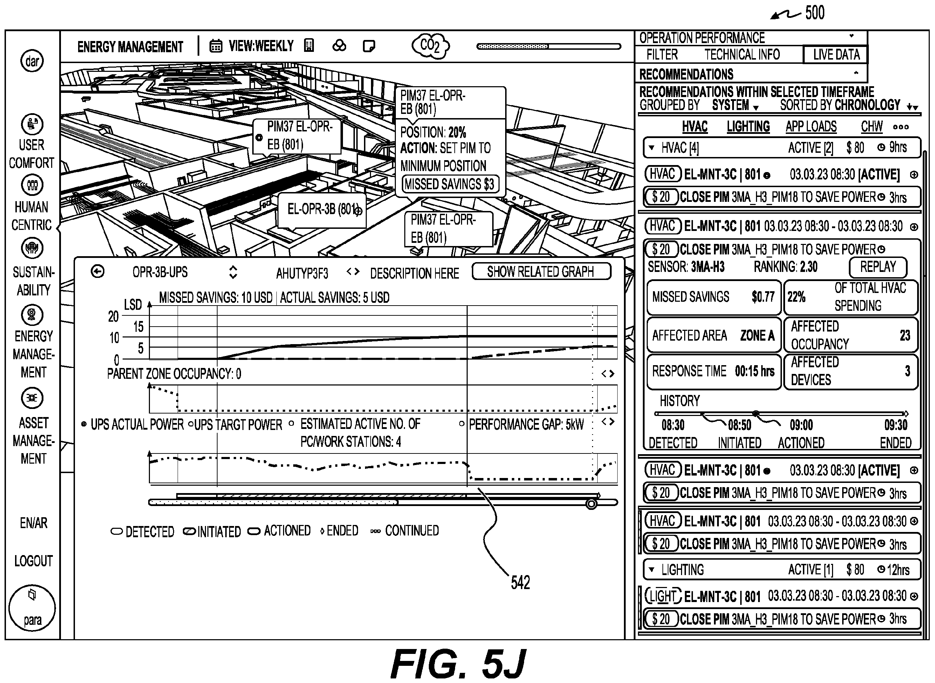

In some embodiments, the user may be able to select a plus symbol to see more information about a specific recommendation. FIG. 5F shows the graphical user interface 500 with additional information 532 about the specific recommendation. The specific recommendation may highlight specific information on the weekly chart 534 and allow the user to replay certain actions. Furthermore, the graphical representation may show a zoomed view 560 of a specific zone. This may show more details about recommendations, such as recommendation 564 or the specific highlighted recommendation 562. If the user selects the highlighted information on the weekly chart 534, the graphical user interface may generate a further advanced view. FIG. 5G shows a further first advanced view 536 related to a first device. The user may also be able to select further advanced views showing different sensor data or different devices at selectable times. FIG. 5H shows second advanced view 538. FIG. 5I shows a third advanced view 540. FIG. 5J shows a fourth advanced view 542. In some embodiments, when exploring a specific recommendation that affects a specific area or zone shown in the 3D model, the specific area or zone of 3D model may be highlighted. In some embodiments, annotations may be made on the 3D model.

### EXAMPLE USE CASE

The following example use case describes an example of a typical user flow pattern. This section is intended solely for explanatory purposes and not in limitation.

In one example, a building is equipped with two air handling units. The first air handling unit supplies air for Zones one and two and the second air handling unit supplies air for Zones three and four. Each zone has its own dampers (pressure independence modules) and temperature, humidity, and carbon dioxide sensors. The building is also equipped with a key-card assess system and associated database that relates the key card with the office location of each employee. The building is equipped with optimization system 320, which is configured to receive local weather information via the internet. The controllers for the air handling units, the sensors, the dampers, and access system are configured to interface with and provide data to optimization system 320. The building has a preset value for the temperature configured by the building manager. The preset value for the temperature is configured to maintain 24 degrees Celsius or less during the workday, and 27 degrees Celsius while the building is unoccupied. The workday temperature is scheduled to be maintained from 7:30AM to 6:00PM, with the temperature adjustment starting at 7:00AM. A graphical user interface shows a user (the building manager) the status of the building systems.

On a bright, sunny Thursday, the outside temperature around the building is scheduled to climb to 35 degrees Celsius. The optimization system 320 receives data (block 202) from each of the systems described above. The optimization system 320 uses the data to populate a generated digital twin of the building environment with airflow data (block 204). On that morning, before the personnel arrive, the optimization system 320 continuously outputs instructions to the air handling units and dampers (via their network-connected controllers) in order to maintain 27 degrees Celsius (block 206). The optimization system 320 predicts a duration to change the 27 degrees Celsius to the 24 degrees Celsius in anticipation of the workday in each of the four zones. Using the digital twin model, the optimization system 320 calculates the amount of time it will take to cool each of the zones from 27 degrees Celsius to 24 degrees Celsius given the outdoor temperature climbing to 35 degrees Celsius while compensating for the different size, ductwork, fresh air vents, pressure independence modules, and other individualities of each of the four zones. The optimization system 320 determines that Zone 1 will take 32 minutes to cool; Zone 2, 35 minutes; Zone 3, 23 minutes, and Zone 4, 48 minutes (block 208). The optimization system 320 determines the occupancy intervals for the employees in each zone. In Zone 1, workers are supposed to be in by 8AM, but most do not arrive before 8:15AM, except for Max, who typically arrives at 8:45AM. Based on historical data, the occupancy of Zone 1 is expected to last until around 5:30PM consistently. In Zone 2, the workers work from home on Thursday. In Zone 3, the workers arrive and leave at varying periods. In Zone 4, there are a couple of assigned workers who periodically visit throughout the day. The optimization system 320 determines that the occupancy interval for Zone 1 is 8 employees for 8:00AM to 8:29AM and 1 employee for 8:30AM to 8:59AM. The occupancy interval for Zone 2 is 0 because it is a Thursday; for Zone 3, it is 3 based on workers' individual habits with no set timing; for Zone 4, it is 2 based on workers' individual habits with no set timing (block 210).

Based on the duration calculated for each zone and the occupancy intervals, as well as the digital twin model, and further input data, the optimization system 320 calculates an estimated ideal power consumption throughout the day for each zone (block 212). The optimization system 320 receives input data regarding the actual power consumption observed for each zone. The optimization system 320 compares the estimated ideal power consumption for each zone to the actual power consumption observed for each zone (block 214). Based on this information, and other historical data, the optimization system 320 generates optimization instructions individual to all four zones (block 216). The optimization instructions for Thursday morning include: for Zone 1, revising the cooling process to 24 degrees Celsius to start at 7:30AM instead of 7:00AM, close the pressure independence modules and lights in Max's office 100 percent until 8:30AM since he doesn't typically arrive until 8:45AM; for Zone 2, close all pressure independence modules and shut off all lights; for Zone 3 and Zone 4 direct the air handling unit to allow the temperature to remain at 27 degrees Celsius and to turn lights off unless the building access system detects the entry of an employee that works in Zone 3 or Zone 4 or there is a specific entry to Zone 3 or Zone 4 (and in the final case only direct air, via the pressure independence modules, to the office of the employee).

The optimization system 320 generates a graphical user interface presenting the optimization instructions (block 218). The optimization system 320 transmits the graphical user interface to the building manager's device (block 220). The building manager selects to allow the optimization instructions for Zone 1 and Zone 2. The building manager fails to act upon the optimization instructions regarding the air handling unit, but does select the for the optimization system 320 to turn off the lights in those zones.

The optimization system 320 receives the building manager's selection of chosen optimization instructions from the building manager's device (block 222). The optimization system 320 outputs the selected optimization instructions to the appropriate controllers for each zone (block 224). For the selected optimization instructions, the optimization system 320 calculates, an actual savings estimate in dollars (the first environment optimization parameter) that the building manager saved by implementing those strategies (block 226). For the optimization instructions that were not selected, the optimization system 320 calculates the missed savings estimate in dollars (the second environment optimization parameter) from not implementing those strategies. The optimization system 320 generates an update to the graphical user interface showing the actual savings, the missed savings, and updates to the building status (block 228). The optimization system 320 transmits the updated graphical user interface to the building manager's device for display (block 230).

In some examples, disclosed systems or methods may involve one or more of the following clauses:
Clause 1: A control system for an environment comprising: one or more sensors; one or more controllers; one or more processors; memory in communication with the one or more processors and storing instructions that are configured to cause the system to: receive input data from the one or more sensors; populate a digital twin of the environment based at least in part on the input data from the one or more sensors, the digital twin comprising one or more zones; continuously output, to the one or more controllers, environmental control instructions, wherein the environmental control instructions control an operation of one or more environmental control devices; predict, using a first machine learning model, a duration required to change an observed environmental condition to a target environmental condition of the one or more zones based on the input data using the one or more environmental control devices; predict, using a second machine learning model, one or more occupancy intervals of one or more occupants of the environment based on the input data; calculate, using the digital twin, an estimated power consumption at the target environmental condition in the one or more zones based on the duration, the one or more occupancy intervals, and the input data; generate a comparison by comparing the estimated power consumption in the one or more zones to an actual power consumption observed in the one or more zones; generate, using the digital twin, one or more optimization instructions for the one or more of the environmental control devices to optimize energy use based on the comparison and the input data; automatically output the one or more optimization instructions to optimize energy use for the one or more zones to the one or more controllers; estimate, using a third machine learning model, an environment optimization parameter for the one or more zones based on the one or more optimization instructions and the input data; and dynamically generate a graphical user interface comprising a graphical representation of the environment and the environment optimization parameter for the one or more zones.
Clause 2: The control system for the environment of clause 1, wherein the memory stores further instructions which are configured to cause the system to: the environmental control instructions comprise occupancy-based rules for the one or more zones based on the digital twin and input data.
Clause 3: The control system for the environment of clause 2, wherein: the environment optimization parameter comprises an actual cost savings estimate, and the actual cost savings estimate is generated using the third machine learning model by simulating airflow through the one or more zones if the occupancy-based rules were not performed, and the third machine learning model is a temporal convolutional network.
Clause 4: The control system for the environment of clause 1, wherein the environmental control devices are one or more air handling units, lights, pressure independence modules, chilled water units, or combinations thereof.
Clause 5: The control system for the environment of clause 1, wherein the input data comprises data from an access control system, a lighting control system, internet-of-things (IOT) sensors, attendance sensors, people counters, and a building management system.
Clause 6: The control system for the environment of clause 1, wherein the memory stores further instructions which are configured to cause the system to: preprocess the input data to be in a common format.
Clause 7: The control system for the environment of clause 1, wherein: the estimated power consumption is calculated by calculating a target airflow calculation for the one or more zones based on the duration, the one or more occupancy intervals, and the input data, and comparing the estimated power consumption to the actual power consumption for the one or more zones comprises comparing the target airflow calculation for the one or more zones to an actual airflow calculation.
Clause 8: The control system for the environment of clause 1, wherein the memory stores further instructions which are configured to cause the system to: dynamically transmit the graphical user interface to a user device for display; receive, via the graphical user interface, a first request to select a specific portion of the graphical representation of the environment; generate an updated graphical user interface displaying a magnified portion of the graphical representation of the environment according to the first request; and transmit the updated graphical user interface to the user device.
Clause 9: The control system for the environment of clause 1, wherein the memory stores further instructions which are configured to cause the system to: dynamically transmit the graphical user interface to a user device for display; receive, via the graphical user interface, a second request to display the one or more optimization instructions grouped by system and chronology; generate an updated graphical user interface grouping the one or more optimization instructions by system and chronology according to the second request; and transmit the updated graphical user interface to the user device.
Clause 10: A control system for an environment comprising: one or more sensors; one or more controllers; one or more processors; memory in communication with the one or more processors and storing instructions that are configured to cause the system to: receive input data from the one or more sensors; populate a digital twin of the environment based at least in part on the input data from the one or more sensors, the digital twin comprising one or more zones; continuously output, to the one or more controllers, environmental control instructions, wherein the environmental control instructions control an operation of one or more environmental control devices; predict, using a first machine learning model, a duration required to change an observed environmental condition to a target environmental condition of the one or more zones based on the input data using the one or more environmental control devices; predict, using a second machine learning model, one or more occupancy intervals of one or more occupants of the environment based on the input data; calculate, using the digital twin, an estimated power consumption at the target environmental condition in the one or more zones based on the duration, the one or more occupancy intervals, and the input data; generate a comparison by comparing the estimated power consumption in the one or more zones to an actual power consumption observed in the one or more zones; generate, using the digital twin, one or more optimization instructions for one or more of the environmental control devices to optimize energy use based on the comparison and the input data; generate a first graphical user interface displaying the one or more optimization instructions; transmit the first graphical user interface to a user device; receive, from the user device, a selection of the one or more optimization instructions; output the selected optimization instructions to optimize energy use to the one or more controllers; estimate, using a third machine learning model, a first environment optimization parameter based on the selected optimization instructions and the input data; generate a second graphical user interface displaying the first environment optimization parameter; and transmit the second graphical user interface to the user device.
Clause 11: The control system for the environment of clause 10, wherein the second graphical user interface further comprises, a graphical representation of the environment.
Clause 12: The control system for the environment of clause 10, wherein the memory stores further instructions which are configured to cause the system to: for the one or more optimization instructions not chosen as part of the selection from the user device, calculate a second environment optimization parameter; generate an updated second graphical user interface displaying the second environment optimization parameter; and transmit the updated second graphical user interface to the user device.
Clause 13: The control system for the environment of clause 10, wherein the memory stores further instructions which are configured to cause the system to: determine occupancy-based rules for the one or more zones based on the digital twin and input data, wherein the occupancy-based rules comprise the environmental control instructions to output to one or more devices.
Clause 14: The control system for the environment of clause 13, wherein the first environment optimization parameter is generated using the third machine learning model by simulating airflow through the one or more zones if the occupancy-based rules were not performed.
Clause 15: The control system for the environment of clause 10, wherein outputting the selected optimization instructions to optimize energy use to one or more controllers further comprises: transmitting, to an air handling unit controller, the environmental control instructions.
Clause 16: A control system for an environment comprising: one or more sensors; one or more processors; memory in communication with the one or more processors and storing instructions that are configured to cause the system to: receive input data from the one or more sensors; populate a digital twin of the environment based at least in part on the input data from the one or more sensors, the digital twin comprising one or more zones; predict, using a first machine learning model, a duration required to change an observed environmental condition to a target environmental condition of the one or more zones based on the input data using one or more environmental control devices; predict, using a second machine learning model, one or more occupancy intervals of one or more occupants of the environment based on the input data; calculate, using the digital twin, an estimated power consumption at the target environmental condition in the one or more zones based on the duration, the one or more occupancy intervals, and the input data; generate a comparison by comparing the estimated power consumption in the one or more zones to an actual power consumption observed in the one or more zones; generate, using the digital twin, one or more optimization instructions for the one or more environmental control devices to optimize energy use based on the comparison and the input data; automatically output the one or more optimization instructions to optimize energy use for the one or more zones; estimate, using a third machine learning model, an environment optimization parameter for the one or more zones based on the one or more optimization instructions and the input data; and generate a graphical user interface displaying a graphical representation of the environment and the environment optimization parameter for the one or more zones.
Clause 17: The control system for the environment of clause 16, wherein the memory stores further instructions which are configured to cause the system to: transmit the graphical user interface to a user device; receive additional input data from the one or more sensors; and train the first machine learning model with the additional input data.
Clause 18: The control system for the environment of clause 16, wherein the optimization instructions are output to one or more devices comprising an air handling unit, a light, a pressure independence module, a chilled water unit, or combinations thereof.
Clause 19: The control system for the environment of clause 16, wherein the memory stores further instructions which are configured to cause the system to: determine occupancy-based rules for the one or more zones based on the digital twin and input data, wherein the occupancy-based rules comprise outputting environmental control strategies to one or more controllers, and wherein automatically outputting the one or more optimization instructions to optimize energy use for the one or more zones further comprises outputting the environmental control strategies to the one or more controllers.
Clause 20: The control system for the environment of clause 19, wherein the environment optimization parameter is generated using the third machine learning model by simulating airflow through the one or more zones if the occupancy-based rules were not performed.

The features and other aspects and principles of the disclosed embodiments may be implemented in various environments. Such environments and related applications may be specifically constructed for performing the various processes and operations of the disclosed embodiments or they may include a general-purpose computer or computing platform selectively activated or reconfigured by program code to provide the necessary functionality. Further, the processes disclosed herein may be implemented by a suitable combination of hardware, software, and/or firmware. For example, the disclosed embodiments may implement general purpose machines configured to execute software programs that perform processes consistent with the disclosed embodiments. Alternatively, the disclosed embodiments may implement a specialized apparatus or system configured to execute software programs that perform processes consistent with the disclosed embodiments. Furthermore, although some disclosed embodiments may be implemented by general purpose machines as computer processing instructions, all or a portion of the functionality of the disclosed embodiments may be implemented instead in dedicated electronics hardware.

The disclosed embodiments also relate to tangible and non-transitory computer readable media that include program instructions or program code that, when executed by one or more processors, perform one or more computer-implemented operations. The program instructions or program code may include specially designed and constructed instructions or code, and/or instructions and code well-known and available to those having ordinary skill in the computer software arts. For example, the disclosed embodiments may execute high level and/or low-level software instructions, such as machine code (e.g., such as that produced by a compiler) and/or high-level code that can be executed by a processor using an interpreter.

The technology disclosed herein typically involves a high-level design effort to construct a computational system that can appropriately process unpredictable data. Mathematical algorithms may be used as building blocks for a framework, however certain implementations of the system may autonomously learn their own operation parameters, achieving better results, higher accuracy, fewer errors, fewer crashes, and greater speed.

As used in this application, the terms "component," "module," "system," "server," "processor," "memory," and the like are intended to include one or more computer-related units, such as but not limited to hardware, firmware, a combination of hardware and software, software, or software in execution. For example, a component may be, but is not limited to being, a process running on a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets, such as data from one component interacting with another component in a local system, distributed system, and/or across a network such as the Internet with other systems by way of the signal.

Certain embodiments and implementations of the disclosed technology are described above with reference to block and flow diagrams of systems and methods and/or computer program products according to example embodiments or implementations of the disclosed technology. It will be understood that one or more blocks of the block diagrams and flow diagrams, and combinations of blocks in the block diagrams and flow diagrams, respectively, can be implemented by computer-executable program instructions. Likewise, some blocks of the block diagrams and flow diagrams may not necessarily need to be performed in the order presented, may be repeated, or may not necessarily need to be performed at all, according to some embodiments or implementations of the disclosed technology.

These computer-executable program instructions may be loaded onto a general-purpose computer, a special-purpose computer, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable memory that can direct a computer or other programmable data processing apparatus to function in a particular manner, such that the instructions stored in the computer-readable memory produce an article of manufacture including instruction means that implement one or more functions specified in the flow diagram block or blocks.

As an example, embodiments or implementations of the disclosed technology may provide for a computer program product, including a computer-usable medium having a computer-readable program code or program instructions embodied therein, said computer-readable program code adapted to be executed to implement one or more functions specified in the flow diagram block or blocks. Likewise, the computer program instructions may be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions, and program instruction means for performing the specified functions. It will also be understood that each block of the block diagrams and flow diagrams, and combinations of blocks in the block diagrams and flow diagrams, can be implemented by special-purpose, hardware-based computer systems that perform the specified functions, elements or steps, or combinations of special-purpose hardware and computer instructions.

Certain implementations of the disclosed technology described above with reference to user devices may include mobile computing devices. Those skilled in the art recognize that there are several categories of mobile devices, generally known as portable computing devices that can run on batteries but are not usually classified as laptops. For example, mobile devices can include, but are not limited to portable computers, tablet PCs, internet tablets, PDAs, ultra-mobile PCs (UMPCs), wearable devices, and smart phones. Additionally, implementations of the disclosed technology can be utilized with internet of things (IoT) devices, smart televisions and media devices, appliances, automobiles, and voice command devices, along with peripherals that interface with these devices.

In this description, numerous specific details have been set forth. It is to be understood, however, that implementations of the disclosed technology may be practiced without these specific details. In other instances, well-known methods, structures, and techniques have not been shown in detail in order not to obscure an understanding of this description. References to "one embodiment," "an embodiment," "some embodiments," "example embodiment," "various embodiments," "one implementation," "an implementation," "example implementation," "various implementations," "some implementations," etc., indicate that the implementation(s) of the disclosed technology so described may include a particular feature, structure, or characteristic, but not every implementation necessarily includes the particular feature, structure, or characteristic. Further, repeated use of the phrase "in one implementation" does not necessarily refer to the same implementation, although it may.

Throughout the specification and the claims, the following terms take at least the meanings explicitly associated herein, unless the context clearly dictates otherwise. The term "connected" means that one function, feature, structure, or characteristic is directly joined to or in communication with another function, feature, structure, or characteristic. The term "coupled" means that one function, feature, structure, or characteristic is directly or indirectly joined to or in communication with another function, feature, structure, or characteristic. The term "or" is intended to mean an inclusive "or." Further, the terms "a," "an," and "the" are intended to mean one or more unless specified otherwise or clear from the context to be directed to a singular form. By "comprising" or "containing" or "including" is meant that at least the named element, or method step is present in article or method, but does not exclude the presence of other elements or method steps, even if the other such elements or method steps have the same function as what is named.

It is to be understood that the mention of one or more method steps does not preclude the presence of additional method steps or intervening method steps between those steps expressly identified. Similarly, it is also to be understood that the mention of one or more components in a device or system does not preclude the presence of additional components or intervening components between those components expressly identified.

Although embodiments are described herein with respect to systems or methods, it is contemplated that embodiments with identical or substantially similar features may alternatively be implemented as systems, methods and/or non-transitory computer-readable media.

As used herein, unless otherwise specified, the use of the ordinal adjectives "first," "second," "third," etc., to describe a common object, merely indicates that different instances of like objects are being referred to, and is not intended to imply that the objects so described must be in a given sequence, either temporally, spatially, in ranking, or in any other manner.

While certain embodiments of this disclosure have been described in connection with what is presently considered to be the most practical and various embodiments, it is to be understood that this disclosure is not to be limited to the disclosed embodiments, but on the contrary, is intended to cover various modifications and equivalent arrangements included within the scope of the appended claims. Although specific terms are employed herein, they are used in a generic and descriptive sense only and not for purposes of limitation.

This written description uses examples to disclose certain embodiments of the technology and also to enable any person skilled in the art to practice certain embodiments of this technology, including making and using any apparatuses or systems and performing any incorporated methods. The patentable scope of certain embodiments of the technology is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A control system for an environment comprising:
one or more sensors;
one or more controllers;
one or more processors;
memory in communication with the one or more processors and storing instructions that are configured to cause the system to:
receive input data from the one or more sensors;
populate a digital twin of the environment based at least in part on the input data from the one or more sensors, the digital twin comprising one or more zones;
continuously output, to the one or more controllers, environmental control instructions, wherein the environmental control instructions control an operation of one or more environmental control devices;
predict, using a first machine learning model, a duration required to change an observed environmental condition to a target environmental condition of the one or more zones based on the input data using the one or more environmental control devices;
predict, using a second machine learning model, one or more occupancy intervals of one or more occupants of the environment based on the input data;
calculate, using the digital twin, an estimated power consumption at the target environmental condition in the one or more zones based on the duration, the one or more occupancy intervals, and the input data;
generate a comparison by comparing the estimated power consumption in the one or more zones to an actual power consumption observed in the one or more zones;
generate, using the digital twin, one or more optimization instructions for the one or more of the environmental control devices to optimize energy use based on the comparison and the input data;
automatically output the one or more optimization instructions to optimize energy use for the one or more zones to the one or more controllers;
estimate, using a third machine learning model, an environment optimization parameter for the one or more zones based on the one or more optimization instructions and the input data; and
dynamically generate a graphical user interface comprising a graphical representation of the environment and the environment optimization parameter for the one or more zones.

2. The control system for the environment of claim 1, wherein the memory stores further instructions which are configured to cause the system to:
the environmental control instructions comprise occupancy-based rules for the one or more zones based on the digital twin and input data;
wherein, optionally, the environment optimization parameter comprises an actual cost savings estimate, and the actual cost savings estimate is generated using the third machine learning model by simulating airflow through the one or more zones if the occupancy-based rules were not performed, and the third machine learning model is a temporal convolutional network.

3. The control system for the environment of claim 1 or 2, wherein:
(a) the environmental control devices are one or more air handling units, lights, pressure independence modules, chilled water units, or combinations thereof; and/or
(b) the input data comprises data from an access control system, a lighting control system, internet-of-things (IOT) sensors, attendance sensors, people counters, and a building management system; and/or
(c) the memory stores further instructions which are configured to cause the system to preprocess the input data to be in a common format.

4. The control system for the environment of any one of the preceding claims, wherein:
the estimated power consumption is calculated by calculating a target airflow calculation for the one or more zones based on the duration, the one or more occupancy intervals, and the input data, and
comparing the estimated power consumption to the actual power consumption for the one or more zones comprises comparing the target airflow calculation for the one or more zones to an actual airflow calculation.

5. The control system for the environment of any one of the preceding claims, wherein the memory stores further instructions which are configured to cause the system to:
dynamically transmit the graphical user interface to a user device for display;
receive, via the graphical user interface, a first request to select a specific portion of the graphical representation of the environment;
generate an updated graphical user interface displaying a magnified portion of the graphical representation of the environment according to the first request; and
transmit the updated graphical user interface to the user device.

6. The control system for the environment of any one of the preceding claims, wherein the memory stores further instructions which are configured to cause the system to:
dynamically transmit the graphical user interface to a user device for display;
receive, via the graphical user interface, a second request to display the one or more optimization instructions grouped by system and chronology;
generate an updated graphical user interface grouping the one or more optimization instructions by system and chronology according to the second request; and
transmit the updated graphical user interface to the user device.

7. A control system for an environment comprising:
one or more sensors;
one or more controllers;
one or more processors;
memory in communication with the one or more processors and storing instructions that are configured to cause the system to:
receive input data from the one or more sensors;
populate a digital twin of the environment based at least in part on the input data from the one or more sensors, the digital twin comprising one or more zones;
continuously output, to the one or more controllers, environmental control instructions, wherein the environmental control instructions control an operation of one or more environmental control devices;
predict, using a first machine learning model, a duration required to change an observed environmental condition to a target environmental condition of the one or more zones based on the input data using the one or more environmental control devices;
predict, using a second machine learning model, one or more occupancy intervals of one or more occupants of the environment based on the input data;
calculate, using the digital twin, an estimated power consumption at the target environmental condition in the one or more zones based on the duration, the one or more occupancy intervals, and the input data;
generate a comparison by comparing the estimated power consumption in the one or more zones to an actual power consumption observed in the one or more zones;
generate, using the digital twin, one or more optimization instructions for one or more of the environmental control devices to optimize energy use based on the comparison and the input data;
generate a first graphical user interface displaying the one or more optimization instructions;
transmit the first graphical user interface to a user device;
receive, from the user device, a selection of the one or more optimization instructions;
output the selected optimization instructions to optimize energy use to the one or more controllers;
estimate, using a third machine learning model, a first environment optimization parameter based on the selected optimization instructions and the input data;
generate a second graphical user interface displaying the first environment optimization parameter; and
transmit the second graphical user interface to the user device.

8. The control system for the environment of claim 7, wherein the second graphical user interface further comprises, a graphical representation of the environment.

9. The control system for the environment of claim 7 or 8, wherein the memory stores further instructions which are configured to cause the system to:
for the one or more optimization instructions not chosen as part of the selection from the user device, calculate a second environment optimization parameter;
generate an updated second graphical user interface displaying the second environment optimization parameter; and
transmit the updated second graphical user interface to the user device.

10. The control system for the environment of any one of claims 7 to 9, wherein the memory stores further instructions which are configured to cause the system to:
determine occupancy-based rules for the one or more zones based on the digital twin and input data, wherein the occupancy-based rules comprise the environmental control instructions to output to one or more devices;
wherein, optionally, the first environment optimization parameter is generated using the third machine learning model by simulating airflow through the one or more zones if the occupancy-based rules were not performed.

11. The control system for the environment of any one of claims 7 to 10, wherein outputting the selected optimization instructions to optimize energy use to one or more controllers further comprises:
transmitting, to an air handling unit controller, the environmental control instructions.

12. A control system for an environment comprising:
one or more sensors;
one or more processors;
memory in communication with the one or more processors and storing instructions that are configured to cause the system to:
receive input data from the one or more sensors;
populate a digital twin of the environment based at least in part on the input data from the one or more sensors, the digital twin comprising one or more zones;
predict, using a first machine learning model, a duration required to change an observed environmental condition to a target environmental condition of the one or more zones based on the input data using one or more environmental control devices;
predict, using a second machine learning model, one or more occupancy intervals of one or more occupants of the environment based on the input data;
calculate, using the digital twin, an estimated power consumption at the target environmental condition in the one or more zones based on the duration, the one or more occupancy intervals, and the input data;
generate a comparison by comparing the estimated power consumption in the one or more zones to an actual power consumption observed in the one or more zones;
generate, using the digital twin, one or more optimization instructions for the one or more environmental control devices to optimize energy use based on the comparison and the input data;
automatically output the one or more optimization instructions to optimize energy use for the one or more zones;
estimate, using a third machine learning model, an environment optimization parameter for the one or more zones based on the one or more optimization instructions and the input data; and
generate a graphical user interface displaying a graphical representation of the environment and the environment optimization parameter for the one or more zones.

13. The control system for the environment of claim 12, wherein the memory stores further instructions which are configured to cause the system to:
transmit the graphical user interface to a user device;
receive additional input data from the one or more sensors; and
train the first machine learning model with the additional input data.

14. The control system for the environment of claim 12 or 13, wherein the optimization instructions are output to one or more devices comprising an air handling unit, a light, a pressure independence module, a chilled water unit, or combinations thereof.

15. The control system for the environment of any one of claims 12 to 14, wherein the memory stores further instructions which are configured to cause the system to:
determine occupancy-based rules for the one or more zones based on the digital twin and input data, wherein the occupancy-based rules comprise outputting environmental control strategies to one or more controllers, and
wherein automatically outputting the one or more optimization instructions to optimize energy use for the one or more zones further comprises outputting the environmental control strategies to the one or more controllers;
wherein, optionally, the environment optimization parameter is generated using the third machine learning model by simulating airflow through the one or more zones if the occupancy-based rules were not performed.
